# EUROPÄISCHE PATENTSCHRIFT

(11) **EP 0 691 975 B1**
(45) Veröffentlichungstag und Bekanntmachung des Hinweises auf die Patenterteilung: **04.06.1997**
(21) Anmeldenummer: 94912541.3
(22) Anmeldetag: 24.03.1994
(51) Int. Cl.: C07F 9/30

(54) **NEUE BIS(AMINOMETHYL)PHOSPHINSÄURE-DERIVATE UND VERFAHREN ZUR HERSTELLUNG VON BIS(AMINOMETHYL)PHOSPHINSÄURE-DERIVATEN**
BIS(AMINOMETHYL)PHOSPHINIC ACID DERIVATIVES AND METHOD OF PREPARING THEM
NOUVEAUX DERIVES D'ACIDE BIS (AMINOMETHYL) PHOSPHINIQUE ET LEUR PROCEDE DE PREPARATION

(30) Priorität: 02.04.1993 DE 4310815
(43) Veröffentlichungstag der Anmeldung: 17.01.1996
(73) Patentinhaber: HOECHST AKTIENGESELLSCHAFT, 65929 Frankfurt am Main (DE)
(72) Erfinder: PEYMAN, Anuschirwan, D-65779 Kelkheim (DE); SPANIG, Jörg, D-12437 Berlin (DE); BUDT, Karl-Heinz, D-65779 Kelkheim (DE)
(86) Internationale Anmeldenummer: EP9400950
(87) Internationale Veröffentlichungsnummer: WO9422879

(56) Entgegenhaltungen:
- EP-A- 0 435 059
- WO-A-93/20086
- DE-A- 2 805 074
- DE-A- 3 824 961
- US-A- 5 099 063

## Beschreibung

α-Aminophosphonsäuren und deren Derivate erlangen z.B. als Enzyminhibitoren, immer größere Bedeutung in der Biochemie, der pharmazeutischen Chemie und im Bereich des Pflanzenschutzes [P.Kafarski, B.Lejczak, Phosph.,Sulfur, and Silicon, 63(1991)193]. Zur Synthese dieser Verbindungsklasse gibt es eine ganze Palette von Verfahren, die in verschiedenen Arbeiten zusammengefaßt wurden [Kukhar und Solodenko, Russ. Chem. Rev. 56 (1987) 859, Redmoore, Topics in Phosphorus Chemistry, Vol. 11, Grayson and Griffith, Ed., Wiley 1976, 515].

Die Darstellung einer anderen Verbindungsklasse, der Bis(aminomethyl)phosphinsäure und deren Derivate, denen in der pharmazeutischen Chemie ebenfalls steigende Bedeutung zukommt (EP 0435 059 Al) ist weitaus aufwendiger und nur wenig dokumentiert. Die Synthese der Stammverbindung wurde erstmals von Meier beschrieben [L. Meier, J. Organomet. Chem. 178 (1979) 157, DE 2805074A1, s. auch Kober et al., DE 3824961A1]. Eine Möglichkeit zur Herstellung von α- bzw. α,α'-substituierten Derivaten der Bis(aminomethyl)phosphinsäure wird von Tyka et al. [Phosphorus, Sulfur, and Silicon 62 (1991) 75] beschrieben. Die Methode beruht auf der Addition von unterphosphoriger Säure an Schiff-Basen unter Bildung von aminoalkylphosphonigen Säuren im ersten Schritt, die dann im folgenden mit Arylidenbisamiden zu α,α-Bis(aminoalkyl)phosphinsäuren umgesetzt werden. Dieses Verfahren ist jedoch begrenzt auf die Umsetzung mit Arylidenbisamiden und ist weiterhin gekennzeichnet durch mäßige Ausbeuten. Nur mäßige Ausbeuten wurden auch für die doppelte Addition von unterphosphoriger Säure an Schiff-Basen unter Bildung von α,α'-Bis(aminoalkyl)phosphinsäuren beobachtet. Ein weiteres Verfahren [A.Peyman et al., Tetrahedron Lett. 33 (1992) 4549] beruht auf der Alkylierung der Bis(aminomethyl)phosphinsäure, jedoch lassen sich so nur Reste einführen, die der nucleophilen Substitution zugänglich sind. Überraschenderweise wurde gefunden, daß sich viele Verbindungen vorteilhaft durch Alkylierungen umgekehrter Polarität herstellen lassen.

Erfindungsgegenstand ist demzufolge ein Verfahren zur Herstellung von Verbindungen der Formel VI 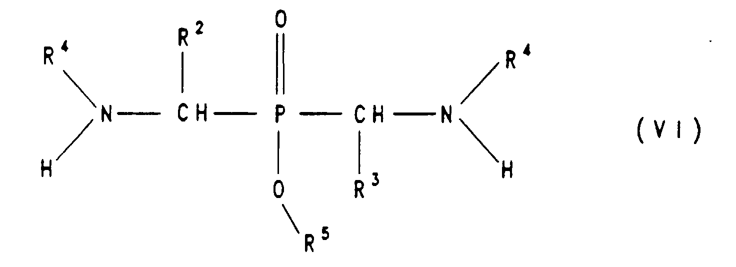 worin R² und R³, unabhängig voneinander stehen für Wasserstoff (C₁-C₁₈)-Alkyl, (C₂-C₁₈)-Alkenyl, (C₂-C₁₈)-Alkinyl, wobei Alkyl, Alkenyl und Alkinyl jeweils ein oder mehrfach mit Fluor, Chlor, Brom, COOH, Oxo, NO₂, NH₂, NHC(O)-(C₁-C₆)-Alkyl, NHC(O)-(C₆-C₁₂)-Aryl, CN, OH, CHO, CH-[(C₁-C₆)-Alkoxy]₂, COOH, SO₃H, C(O)-O-(C₁-C₈)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₁-C₆)-Alkyl, O-C(O)-(C₆-C₁₂)-Aryl, (C₁-C₆)-Alkoxy substituiert sein können,
für C₆-C₁₂)-Aryl, (C₇-C₂₂)-Aryl, (C₇-C₂₂)-Arylalkyl- wobei Aryl ein oder mehrfach mit Fluor, Chlor, Brom, NO₂, NH₂, NHCO(O)-(C₁-C₆)-Alkyl, NHC(O)-(C₆-C₁₂)-Aryl, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C-(O)-(C₁-C₆)-Alkyl, O-C(O)-(C₆-C₁₂)-Aryl substituiert sein kann, oder für P(O)[OH]₂, P(O)(OR²³)₂, wobei R²³ unabhängig voneinander (C₁-C₆)-Alkyl, (C₆-C₁₂)-Aryl oder (C₇-C₁₃l-Arylalkyl bedeuten und wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₁-C₁₂)-Aryl, O-C(O)-(C₁-C₆)-Alkyl oder O-C(O)-(C₆-C₁₂)-Aryl substituiert sein kann, wobei R² und R³ nicht gleichzeitig für Wasserstoff stehen,

R⁴ bedeutet eine Schutzgruppe für die Aminofunktion und R⁵ steht für (C₁-C₁₈)-Alkyl, (C₂-C₁₈)-Alkenyl, (C₂-C₁₈)-Alkinyl, (C₆-C₁₂)-Aryl, (C₇-C20)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl , C(O)-(C₆-C₁₂)-Aryl, O-C(O)-(C₁-C₆)-Alkyl, O-C(O)-(C₆-C₁₂)-Aryl substituiert sein kann,
dadurch gekennzeichnet, daß eine Verbindung der Formel IV

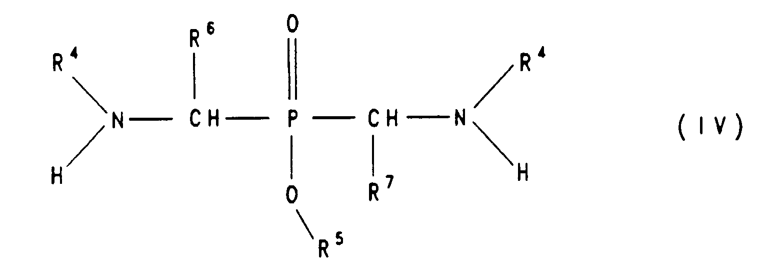

in der R⁴ und R⁵ die obengenannte Bedeutung haben und
R⁶ und R⁷ unabhängig voneinander stehen für H, Cl oder Br, wobei nicht beide Reste gleichzeitig Wasserstoff bedeuten
a) durch Reaktion mit einer Base in eine Verbindung der Formel Va oder Vb umgesetzt wird, 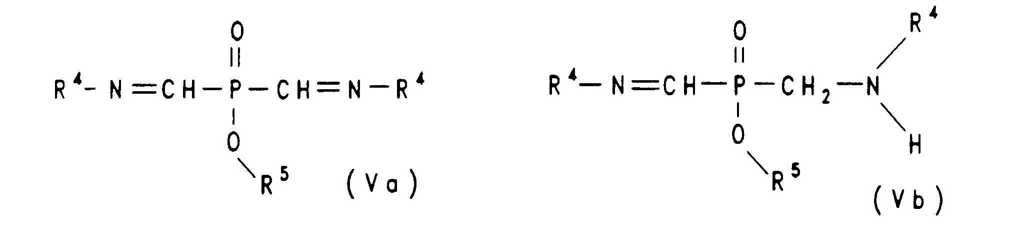 wobei R⁴ und R⁵ die obengenannten Bedeutungen haben und zur Herstellung der Verbindung VI eine Verbindung der Formel Va oder Vb mit C-Nucleophilen, umgesetzt wird, oder
b) die Verbindung der Formel VI durch direkte Umsetzung einer Verbindung der Formel IV mit R²₂Cu(CN)Li₂, R²Li, R²MgX, R²ZnX, R²₂Zn, R²₄₋ₙTiR²²n (n<4), P[O-R²³]₃, wobei R² die obengenannte Bedeutung hat, R²² steht für N-[(C₁-C₆)-Alkyl]₂, O-(C₁-C₆)-Alkyl, O-(C₆-C₁₂)-Aryl, wobei Aryl mit Fluor, Chlor, Brom, NO₂, NH₂ bzw. geschützte Form, CN, OH, COOH, C(O)-O-(C₁-C₆)-Alkyl, (C₁-C₆)-Alkyl, (C₁-C₆)-Alkoxy substituiert sein kann, oder für ein Weinsäurederivat und R²³ bedeutet (C₁-C₆)-Alkyl, (C₆-C₁₂)-Aryl, (C₇-C₁₃)-Arylalkyl, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-(C₁-C₆)-Alkyl , O-C(O)-(C₁-C₆)-Alkyl substituiert sein kann, und X eine Abgangsgruppe bedeutet, hergestellt wird.

Besonders geeignet ist das Verfahren zur Herstellung von Verbindungen der Formel VI, worin R² und R³ unabhängig voneinander stehen für (C₁-C₆)-Alkyl, (C₂-C₆)-Alkenyl, (C₂-C₆)-Alkinyl, wobei Alkyl ein- oder mehrfach mit Oxo, Fluor, Chlor, Brom, COOH, C(O)-(C₁-C₆)-Alkyl, C(O)-O-(C₁-C₆)-Alkyl substituiert sein kann, (C₆-C₁₂)-Aryl, (C₇-C₁₃)-Arylalkyl wobei Aryl ein- oder mehrfach mit Chlor, Brom, CN, (C₁-C₃)-Alkoxy substituiert sein kann; P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten, insbesondere stehen R¹ und R² für (C₁-C₆)-Alkyl, (C₂-C₆)-Alkenyl, (C₂-C₆)-Alkinyl, Benzyl, P(O)[OH]₂ oder P(O)[O-(C₁-C₆)-Alkyl]₂ bedeuten, und R⁵ steht für (C₁-C₄)-Alkyl, (C₂-C₄)-Alkenyl, Phenyl, Benzyl, insbesondere steht R⁵ für (C₁-C₄)-Alkyl oder Benzyl.

Die Herstellung der Imine Va erfolgt durch die Umsetzung von IV (R⁶ und R⁷ = Halogen) mit 1 bis 10 Equivalenten, bevorzugt 2 bis 2,2 Equivalente, Base vorzugsweise Tri-(C₁-C₆)-alkyl-amin, Pyridin, Butyllithium, Lithiumdiisopropylamin (LDA), Natriumhydrid, Natriumamid, Kalium-tert.-butylat oder komplexe Base wie Natriumamid-R²¹ONa , wobei R²¹ für (C₂-C₆)-Alkyl oder CH₃CH₂-O-CH₂CH₂ steht oder ungeladene, peralkylierte Polyamino-Phosphazen-Basen [R.Schwesinger, H.Schlemper, Angew.Chem.99(1987)1212; R.Schwesinger, Nachr.Chem.Tech. Lab.38 (1990)1214], bevorzugt mit Trialkylaminen, Pyridin, in einem geeigneten organischen Lösungsmittel, bevorzugt Tetrahydrofuran (THF), Diethylether (Ether) bzw. Dichlormethan, bei einer Temperatur von -120° bis 50°C, bevorzugt -100° bis 0°C. Die hochreaktiven Verbindungen der Formel V werden vorzugsweise ohne weitere Reinigung, gegebenenfalls nach Filtration, weiter eingesetzt.
Nach der oben beschriebenen Methode lassen sich auch die Imine Vb herstellen. Allerdings kommen bei der Umsetzung der monosubstituierten Verbindungen IV (R⁷ = H) nur 0,5 bis 5 Equivalente, bevorzugt 1 bis 1,1 Equivalente, der oben genannten Basen zum Einsatz.

Anschließend werden die Bis(iminomethyl)phosphinsäureester V zu α,α'-substituierten Phosphinsäureestern VI umgesetzt.
R⁴ und R⁵ sind wie in Formel III, R² und R³ wie in Formel definiert.
e₁) Zur Herstellung von Verbindungen der Formel VI (R³ = R²) wird der Bis(iminomethyl)phosphinsäureester Va mit 1 bis 10 Equivalenten, bevorzugt 2 bis 2,2 Equivalenten, von C-Nucleophilen, die aus CH-aciden Verbindungen wie z.B. Vlla und Vllb, VIII, IX durch Basen wie Butyllithium, LDA, Natriumhydrid, Natriumamid, Kalium-tert.-butylat, Komplexe Basen (Natriumamid-R²¹ONa) o.ä. erzeugt werden, metallorganischen Verbindungen R²²Cu(CN)Li₂, R²Li, R²MgX, R²ZnX, R²₂Zn oder R²₄₋ₙTiR²²n (n<4), bevorzugt Nucleophile aus VII, VIII, IX, R²₂Cu(CN)Li₂, R²MgX, in einem geeigneten Lösungsmittel, bevorzugt THF, Ether, bei einer Temperatur von -120° bis 150°C, bevorzugt -100° bis 0°C, umgesetzt. 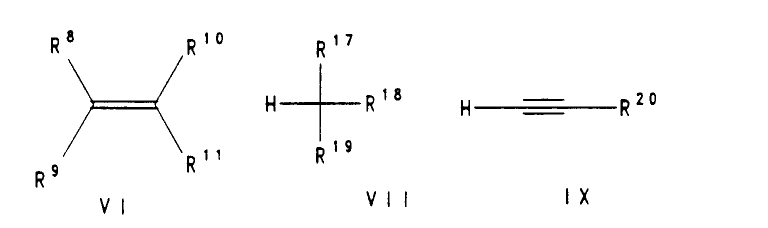 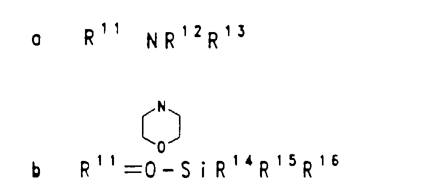 R² und R²² sind wie oben definiert, jedoch ungleich Wasserstoff und X steht für eine Abgangsgruppe, bevorzugt für Chlor, Brom, Jod, O-p-Toluolsulfonat, O-Trifluormethylsulfonat, O-(C₁-C₆)-Alkylsulfonat, besonders bevorzugt für Chlor, Brom, Jod.
   Für die Reaktion geeignete Weinsäurederivate sind bei D. Seebach et al. [Tetrahedron 48 (1992) 5719] beschrieben.
R⁸, R⁹, R¹⁰, gleich oder unabhängig voneinander, stehen für Wasserstoff, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl. Dabei können Alkyl, Alkenyl, Alkinyl und Aryl ein oder mehrfach mit Fluor, Chlor, Brom, NO₂, NH₂ bzw. geschützte Form [Greene, Protective Groups in Organic Synthesis, Wiley 1979], (C₁-C₆)-Alkyl, (C₁-C₆)-Alkoxy, CN, OH, CHO, CH-[(C₁-C₆)-Alkoxy]₂, COOH, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl substituiert sein.
   R¹², R¹³, R¹⁴, R¹⁵ und R¹⁶ sind gleich oder unabhängig voneinander und stehen für (C₁-C₆)-Alkyl, (C₆-C₁₂)-Aryl, wobei Alkyl und Aryl ein oder mehrfach mit Fluor, Chlor, Brom, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann.
   R¹⁷ steht für Wasserstoff, (C₁-C₆)-Alkyl, wobei Alkyl ein oder mehrfach mit Fluor, Chlor, Brom, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann. R¹⁸ und R¹⁹, gleich oder unabhängig voneinander, stehen für Wasserstoff, CN, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, wobei Alkyl und Aryl ein oder mehrfach mit Fluor, Chlor, Brom, NO₂, NH₂ bzw. geschützte Form, CN, OH, COOH, (C₁-C₆)-Alkyl, (C₁-C₆l-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann, mit der Maßgabe, daß für R¹⁸ = Wasserstoff R¹⁹ nicht ebenfalls für Wasserstoff steht und umgekehrt.
   R²⁰ steht für Wasserstoff, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl. Dabei können Alkyl, Alkenyl, Alkinyl und Aryl ein oder mehrfach mit Fluor, Chlor, Brom, NO₂, NH₂ bzw. geschützte Form [Greene, Protective Groups in Organic Synthesis, Wiley 1979], (C₁-C₆)-Alkyl, (C₁-C₆)-Alkoxy, CN, OH, CHO, CH-[(C₁-C₆)-Alkoxy]₂, COOH, C(O)-O-(C₁-C₆)-Alkyl, C(O)-O-(C₆-C₁₂)-Aryl, C(O)-(C₁-C₆)-Alkyl C(O)-(C₆-C₁₂)-Aryl, O-C(O)-(C₁-C₆)-Alkyl, O-C(O)-(C₆-C₁₂)-Aryl substituiert sein. Nach Aufarbeitung und Reinigung durch Einengen z.B. Kristallisation, Extraktion, Reinigung an Kieselgel erhält man die Verbindungen VI (R² = R³).
e₂) Alternativ lassen sich die Phosphinsäureester VI (R² = R³) durch direkte Umsetzung von IV (R⁶ = R⁷ = Halogen) mit 3 bis 10 Equivalenten, bevorzugt 4 bis 6 Equivalenten, R²₂Cu(CN)Li₂, R₂Li, R²MgX, R²ZnX, R²₂Zn, R²₄₋ₙTiR²²n (n<4), P[O-R²³]₃, bevorzugt R²₂Cu(CN)Li₂, R²MgX, P[O-R²³]₃, in einem geeigneten Lösungsmittel, bevorzugt THF oder Ether, bei einer Temperatur von -120° bis 150°C, bevorzugt -100° bis 0°C bzw. 20° bis 80°C [P[O-R²³]₃], herstellen. R² und R²² haben die obengenannten Bedeutungen.
   R²³ steht für (C₁-C₆)-Alkyl, (C₆-C₁₂)-Aryl, (C₇-C₁₃)-Arylalkyl, wobei Aryl ein oder mehrfach mit Fluor, Chlor, Brom, NO₂, CN, OH, COOH, (C₁-C₆)-Alkyl, (C₁-C₆)- Alkoxy, C(O)-O-(C₁-C₆)-Alkyl, C(O)-(C₁-C₆)-Alkyl, O-C(O)-(C₁-C₆)-Alkyl substituiert sein kann.
   Nach Aufarbeitung und Reinigung z.B. durch Einengen, Kristallisation, Extraktion, Reinigung an Kieselgel erhält man die Verbindungen VI (R² = R³).
e₃) Phosphinsäureester VI, in denen R³ ungleich R² ist und R² und R³ wie in I definiert sind, werden, wie in e₁) beschrieben, hergestellt, jedoch werden zuerst lediglich 0,3 bis 2 Equivalente, bevorzugt 1 bis 1,2 Equivalente, der C-Nucleophile, die aus CH-aciden Verbindungen erzeugt werden wie z.B. VIIa¹ und VIIb¹, VIII¹, IX¹, der metallorganischen Verbindungen R²₂Cu(CN)Li₂, R²Li, R²MgX, R²ZnX, R²₂Zn oder R²₄₋ₙTiR²²ₙ (n<4), bevorzugt Nucleophile aus VII¹, VIII¹, IX¹, R²₂Cu(CN)Li₂, R²MgX, und danach 0,5 bis 4 Equivalente, bevorzugt 1 bis 1,3 Equivalente, der C-Nucleophile, die aus CH-aciden Verbindungen erzeugt werden wie z.B. VIIa² und VIIb², VIII², IX², der metallorganischen Verbindungen R³₂Cu(CN)Li₂, R³Li, R³MgX, R³ZnX, R³₂Zn oder R³₄₋ₙTiR²²ₙ (n<4), bevorzugt Nucleophile aus VII², VIII², IX², R³₂Cu(CN)Li₂, R³MgX, eingesetzt (im vorstehenden Text bedeutet die Hochzahl zu den römischen Ziffern, daß die jeweiligen Reste mit der Hochzahl 1 und 2 sich unterscheiden).
e₄) Alternativ lassen sich Phosphinsäureester VI, in denen R³ ungleich R² ist und R² und R³ wie in l definiert sind, wie in e₂) beschrieben, herstellen, jedoch werden zuerst lediglich 2 bis 5 Equivalente, bevorzugt 3 bis 3,5 Equivalente, R²₂Cu(CN)Li₂, R²Li, R²MgX, R²ZnX, R²₂Zn oder R²₄₋ₙTiR²²n (n<4), bevorzugt R²₂Cu(CN)Li₂, R²MgX, und danach 0,5 bis 4 Equivalente, bevorzugt 1 bis 1,3 Equivalente, der C-Nucleophile, die aus CH-aciden Verbindungen erzeugt werden wie z.B. Vlla und Vllb, VIII, IX, der Verbindungen R³₂Cu(CN)Li₂, R³MgX, R³ZnX, R³₂Zn oder
   R³₄₋ₙTiR²²n (n<4), bevorzugt Nucleophile aus VII, VIII, IX, R³₂Cu(CN)Li₂, R³MgX, eingesetzt.
e₅) Phosphinsäureester VI, in denen R³ ungleich R² ist, R³ = P(O)[O-R²³]₂ und R² wie oben definiert ist, lassen sich, wie in e₂) beschrieben, herstellen, jedoch werden zuerst lediglich 0,5 bis 5 Equivalente, bevorzugt 1 bis 1,2 Equivalente, P[O-R²³]₃ und danach 1 bis 5 Equivalente, bevorzugt 2 bis 2,2 Equivalente der Verbindungen R²₂Cu(CN)Li₂, R²Li, R²MgX, R²ZnX, R²₂Zn oder R²₄₋ₙTiR²²n (n<4), bevorzugt R²₂Cu(CN)Li₂, R²MgX, eingesetzt.
e₆) Phosphinsäureester VI, in denen R³ ungleich R² ist, R³ für P(O)[O-R²³]₂ und R² für P(O)[O-R^{23'}]₂ steht, lassen sich, wie in e₂) beschrieben, herstellen, jedoch werden zuerst lediglich 0,5 bis 5 Equivalente, bevorzugt 1 bis 1,2 Equivalente, P[O-R²³]₃ und danach 0,5 bis 5 Equivalente, bevorzugt 1 bis 1,2 Equivalente, P[O-R^{23'}]₃ eingesetzt.
   R^{23'} kann die gleichen Bedeutungen haben, wie oben für R²³ definiert, ist aber in diesem konkreten Fall ungleich R²³.
e₇) Phosphinsäureester VI, in denen R³ für Wasserstoff steht und R² wie in Formel I definiert aber ungleich Wasserstoff ist, lassen sich, wie in e₁) beschrieben, aus Vb (R⁷ = H) herstellen, jedoch werden nur 0,5 bis 5 Equivalente, bevorzugt 1 bis 1,2 Equivalente, der C-Nucleophile, die aus CH-aciden Verbindungen erzeugt werden wie z.B. VIIa und VIIb, VIII, der metallorganischen Verbindungen R²₂Cu(CN)Li₂, R²Li, R²MgX, R²ZnX, R²₂Zn oder R²TiR²²₃, P[O-(C₁-C₆)-Alkyl]₃, bevorzugt VII, VIII, P[O-(C₁-C₆)-Alkyl]₃, R²₂Cu(CN)Li₂, R²MgX, eingesetzt.
e₈) Alternativ lassen sich Phosphinsäureester VI, in denen R³ für Wasserstoff steht und R² wie oben definiert aber ungleich Wasserstoff ist, wie in e₂) beschrieben, aus IV (R⁷ = H) herstellen, jedoch werden nur 0,5 bis 10 Equivalente, bevorzugt 2 bis 3 Equivalente, der metallorganischen Verindungen R²₂Cu(CN)Li₂, R²Li, R²MgX, R²ZnX, R²₂Zn oder R²TiR²²₃, bevorzugt R²₂Cu(CN)Li₂, R²MgX, eingesetzt.

Die Ausgangsverbindungen der Formel IV kann auf unterschiedliche Weise hergestellt werden, z.B. kann zunächst ausgehend von einer Verbindung der Formel (II) zunächst die Aminogruppierungen der Bis(aminomethyl)phosphinsäure [Synthese nach L. Meier, J. Organomet. Chem. 178 (1979) 157] geschützt werden (Formel II) 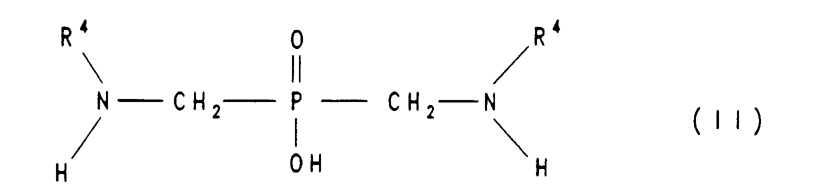 In Formel II soll NHR⁴ für die geschützte Aminofunktion stehen. Es können die allgemein bekannten Schutzgruppen für Aminofunktionen [Greene, Protective Groups in Organic Synthesis, Wiley 1979] in an sich bekannter Weise eingesetzt werden, insbesondere aber die für die Peptidchemie bekannten Schutzgruppen [Bodanszky & Bodanszky, The Practice of Peptide Synthesis, Springer 1984] in der für Aminosäuren allgemein bekannten Weise eingeführt werden. Bevorzugte Schutzgruppen sind Carbamate und Acylschutzgruppen. Besonders bevorzugt sind die tert.-Butyloxycarbonyl-(Boc), 9-Fluorenylmethyloxycarbonyl-(Fmoc), 2,2,2-Trichlorethyloxycarbonyl, Acetyl- und Benzoyl-Schutzgruppen. Ganz besonders bevorzugt sind die Boc- und die Benzoylschutzgruppe.
Beispielsweise wird die Bis(aminomethyl)phosphinsäure mit 1 bis 5
Equivalenten, bevorzugt 2 bis 2,5 Equivalente, Acylchlorid, Acylanhydrid oder Acyl-Aktivester, bevorzugt Acylchlorid, in Gegenwart einer Base, vorzugsweise Pyridin, bei -30 bis + 80°C, vorzugsweise bei -10 bis +20°C während 2 bis 3 Stunden umgesetzt. Die Aufarbeitung erfolgt durch Einengen, Ansäuern und Extraktion.
Ein weiteres Beispiel ist die Umsetzung von Bis(aminomethyl)phosphinsäure mit 1 bis 5 Equivalenten, bevorzugt 2 bis 2,5 Equivalente, Di-tert.-butylpyrocarbonat in Gegenwart eines geringen Überschusses an Base (bezogen auf die Aminogruppen), vorzugsweise NaOH in wäßrigem Dioxan, bei -30 bis +50°C, vorzugsweise bei -10 bis +20°C, während 2 bis 3 Stunden. Die Aufarbeitung erfolgt, wie bei Bodanszky für Aminosäuren beschrieben, in an sich bekannter Weise durch Einengen, Ansäuern auf pH 2-3 und Extraktion.

Die N,N'-geschützte Bis(aminomethyl)phosphinsäure II kann im nächsten Schritt mit R⁵-OH zu III verestert werden, wobei R⁵OH die obengenannten Bedeutungen hat.

R⁴ und R⁵ haben vorzugsweise die obengenannten Bedeutungen.

Die Veresterung erfolgt durch Umsetzung der geschützten Phosphinsäure II, der Verbindung R⁵-OH (wobei R⁵ wie oben definiert ist) und einem geeigneten Kupplungsreagens. Die Bedingungen für die Veresterung richten sich nach den allgemein bekannten Vorschriften zur Veresterung von Phosphonsäuren, wie sie z. B. in Houben-Weyl (Band 12/1 & E2) aufgeführt sind. Alternativ können Kopplungsreagentien, wie sie zur Veresterung N-geschützter α-Aminocarbonsäuren eingesetzt werden IJanin et al., Tetrahedron Lett. 28 (1987) 1661] verwendet werden oder es können auch Kopplungsreagentien, die zur Synthese von Phosphorsäuretriestern in der DNA-Synthese Anwendung finden [Sonveaux, Bioorg. Chem. 14 (1986) 274], eingesetzt werden.

Besonders bevorzugt ist die Umsetzung von II mit 0,5-10 Equivalenten, vorzugsweise 1 bis 5 Equivalenten, R⁵-OH und 0,5 bis 2 Equivalenten, bevorzugt 1-1,2 Equivalenten, Dicyclohexylcarbodiimid (DCC) in einem geeigneten organischen Lösungsmittel, bevorzugt THF, bei Temperaturen von 0-100 °C, bevorzugt bei 40-70°C (in THF bei 40-67°C) während 0,5 bis 48 Stunden. Die anfallenden Ester III werden in an sich bekannter Weise durch Einengen, Abfiltrieren von N,N'-Dicyclohexylharnstoff, Kristallisation bzw. Chromatographie an Kieselgel gereinigt.

Ebenfalls besonders bevorzugt ist die Umsetzung von II mit Alkylchloroformaten oder Alkenylchloroformaten, die zur Veresterung von α-Aminocarbonsäuren eingesetzt werden [Janin et al., Tetrahedron Lett. 28 (1987) 1661]. Dazu wird II umgesetzt mit 0,5 bis 3 Equivalenten, bevorzugt 1 bis 1,3 Equivalenten, Alkyl- bzw. Alkenylchloroformat, bevorzugt Isobutyl- oder Isopropenylchloroformat, in Gegenwart von 0,5 bis 3, bevorzugt 1 bis 1,2 Equivalenten Trialkylamin, besonders bevorzugt Triethylamin (TEA) oder Diisopropylethylamin (DIPEA), und einer katalytischen Menge Dimethylaminopyridin (DMAP), bevorzugt 0,1 Equivalenten DMAP, sowie 0,5 bis 10 Equivalenten, vorzugsweise 1 bis 5 Equivalenten, R⁵-OH in einem geeigneten organischen Lösungsmittel, bevorzugt Methylenchlorid (CH₂Cl₂), Chloroform (CHCl₃), Tetrahydrofuran (THF), Acetonitril, Dimethylformamid (DMF), Dimethylsulfoxid (DMSO), Dioxan, Toluol, Benzol, Essigsäureethylester (EE), besonders bevorzugt CH₂Cl₂ oder CHCl₃ und Toluol, bei Temperaturen von -10° bis +50°C, bevorzugt 0°-10°C, während 1 bis 12 Stunden. Die Aufarbeitung und Reinigung erfolgt in an sich bekannter Weise wie bei der Veresterung von a-Aminosäuren beschrieben [Janin et al., Tetrahedron Lett. 28 (1987) 1661] durch Extraktion, Kristallisation, Chromatographie an Kieselgel.

Die N,N'-geschützten Bis(aminomethyl)phosphinsäurederivate III können im nächsten Schritt in Verbindungen der Formel IV überführt werden. R⁴, R⁵, R⁶ und R⁷ haben vorzugsweise die obengenannten Bedeutungen.

Die Einführung von R⁶ und R⁷ erfolgt z.B. durch die Umsetzung von III mit 0,5 bis 10 Equivalenten, vorzugsweise 1 bis 5 Equivalenten, Halogen, bevorzugt Brom, in einem geeigneten organischen Lösungsmittel, bevorzugt 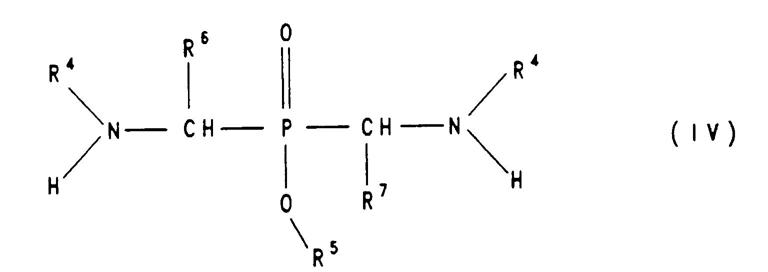 Tetrachlormethan, bei einer Temperatur von -20 bis 115°C unter Bestrahlung in Gegenwart von Radikalstartern wie Peroxiden, Azoverbindungen oder UV-Licht, bevorzugt geeignete Peroxide oder Azoverbindungen, besonders bevorzugt bei einer Temperatur von 60° bis 90°C in Gegenwart von Azobis(isobutyronitril), innerhalb von 5 Minuten bis 24 Stunden, bevorzugt 45 Minuten bis 6 Stunden, bevorzugt unter einer Schutzgasatmosphäre. Aufarbeitung und Reinigung der Verbindungen IV erfolgen nach allgemein üblichen Verfahren wie Filtration, Einengen, Kristallisation, Chromatographie.
Die Einführung von R⁶ und R⁷ kann auch erfolgen durch die Umsetzung von III mit 0,5 bis 10 Equivalenten, vorzugsweise 1 bis 5 Equivalenten, N-Bromamid wie N-Bromsuccinimid (NBS), N-Bromhydantoin, N-Bromcaprolactam, N-Chlorsuccinimid, N-Chlor-N-cyclohexylbenzensulfonamid oder tert.-Butylhypochlorit, bevorzugt N-Bromsuccinimid, in einem geeigneten organischen Lösungsmittel, bevorzugt Tetrachlormethan, bei einer Temperatur von -20 bis 115°C, bevorzugt 5° bis 80°C, unter Bestrahlung und/oder in Gegenwart von geeigneten Radikalstartern innerhalb von 5 Minuten bis 100 Stunden, bevorzugt 1 bis 40 Stunden, bevorzugt unter einer Schutzgasatmosphäre. Aufarbeitung und Reinigung der Verbindungen IV erfolgen nach allgemein üblichen Verfahren wie Filtration, Einengen, Kristallisation, Chromatographie.
Monosubstituierte Verbindungen IV (R⁷ = H) entstehen bei dem Einsatz von 1 bis 1,2 Equivalenten Halogen bzw. der oben genannten N-Halogenverbindungen nach den oben beschriebenen Methoden.

Zum Erfindungsgegenstand gehören weiterhin die Verbindungen der Formel Vl 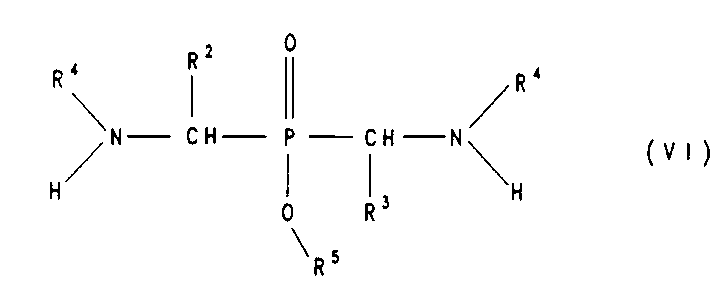 worin R² und R³, unabhängig voneinander stehen für P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl oder O-C(O)-(C₆-C₁₂)-Aryl substituiert sein kann,

R⁴ bedeutet eine Schutzgruppe für die Aminofunktion und
R⁵ steht für (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl , C(O)-O-(C₆-C₁₂)-Aryl, C(O)-(C₁-C₆)-Alkyl , C(O)-(C₆-C₁₂)-Aryl, O-C(O)-(C₁-C₆)-Alkyl oder O-C(O)-(C₆-C₁₂)-Aryl substituiert sein können.

Besonders bevorzugt sind die Verbindungen der Formel VI, worin R² und R³ unabhängig voneinander P(O)[OH]₂, P(O)[O-(C₁-C₄)-Alkyl]₂, P(O)[O-(C₆-C₁₂)-Aryl]₂ oder P(O)[O-(C₇-C₁₃)-Arylalkyl]₂ bedeuten und R⁵ für (C₁-C₆)-Alkyl, (C₆-C₁₂)-Aryl oder (C₇-C₁₃)-Arylalkyl steht, wobei Aryl mit Cl, Br oder (C₁-C₃)-Alkyl substituiert sein kann.
Weiterhin gehören zum Erfindungsgegenstand die Verbindungen der Formel I 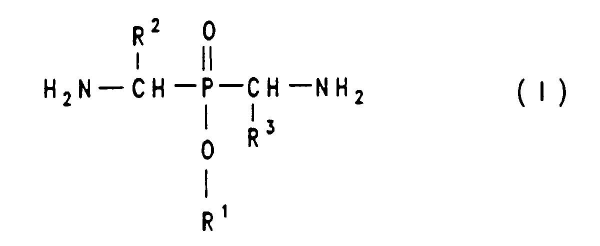 dadurch gekennzeichnet, daß
R¹ H, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl , C(O)-(C₆-C₁₂)-Aryl, O-C(O)-(C₁-C₆)-Alkyl, O-C(O)-(C₆-C₁₂)-Aryl substituiert sein können, bedeutet und
R² und R³ unabhängig voneinander stehen für P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl oder O-C(O)-(C₆-C₁₂)-Aryl substituiert sein kann.

Besonders bevorzugt sind die Verbindungen der Formel 1, worin R¹ H, C₁-C₆)-Alkyl, (C₆-C₁₂)-Aryl, (C₇-C₁₃)-Arylalkyl, wobei Aryl mit Cl, Br, oder (C₁-C₃)-Alkyl substituiert sein kann, bedeutet, und
R² und R³ unabhängig voneinander P(O)[OH]₂, P(O)[O-(C₁-C₄)-Alkyl]₂, P(O)[O-(C₆-C₁₂)-Aryl]₂ oder P(O)[O-(C₇-C₁₃)-Arylalkyl]₂ bedeuten.

Die vorliegende Erfindung umfaßt weiterhin die sauren Salzformen der α- bzw. α,α'-substituierten Derivate der Verbindungen der Formel I und VI der Bis(aminomethyl)-phosphinsäure, insbesondere Hydrogenchloride, Hydrogenbromide, Hydrogensulfate, Acetate, besonders bevorzugt Hydrogenchloride und Hydrogenbromide.

Die erfindungsgemäßen Verbindungen der Formeln VI und I besitzen eine Wirksamkeit als Enzyminhibitoren und sind Zwischenprodukte bei der Synthese von pharmazeutischen Stoffen und Pflanzenschutzmitteln.
f₁) Zur Synthese der Verbindungen der Formel I, in denen R¹ und R⁵ gleich sind, werden die Schutzgruppen R⁴ nach den üblichen Verfahren [Greene, Protective Groups in Organic Synthesis, Wiley 1979] abgespalten.
   So wird z.B. für R⁴ = Boc die Schutzgruppe in VI mit HCI oder HBr in einem geeigneten organischen Lösungsmittel, bevorzugt Ether, Methanol, Dioxan, Diethoxyethan, bei einer Temperatur von 0° bis 50°C, bevorzugt 10°bis 30°, während 1 bis 48 Stunden, bevorzugt 1 bis 5 Stunden, abgespalten. Zur Aufarbeitung und Reinigung der Verbindung I werden allgemein bekannte Methoden verwendet, wie Filtration, Extraktion, Umkristallisation, Lyophilisierung und Chromatographie. Üblicherweise wird der Rückstand nach dem Einengen in Wasser aufgenommen. Die wäßrige Phase wird dann mit festem K₂CO₃ und CH₂Cl₂ gerührt, aus der organischen Phase wird I gewonnen. Zur Reinigung kann noch an Kieselgel chromatographiert werden. I läßt sich durch Ionenaustauschchromatographie oder durch Umsetzung mit Säuren in entsprechende Salze überführen.
f₂) Zur Synthese der Verbindungen der Formel I, in denen R¹ ungleich R⁵ ist, werden die Verbindungen VI in wäßriger HBr, HCI, HBr in Eisessig, bevorzugt in wäßriger HCI, gerührt. Die Reaktion wird bei 0-120°C, bevorzugt bei 70°-100°C, durchgeführt. Die Reaktionsdauer beträgt 1 bis 72 Stunden, bevorzugt 1 bis 24 Stunden. Zur Aufarbeitung und Reinigung werden allgemein bekannte Methoden verwendet, wie Filtration, Extraktion, Umkristallisieren, Lyophilisierung und Chromatographie. I läßt sich durch
   Ionenaustauschchromatographie oder durch Umsetzung mit Säuren in entsprechende Salze überführen.
f₃) Verbindungen der Formel I, in denen R¹ ungleich R⁵ ist, lassen sich alternativ aus Verbindungen der Formel I, in denen R¹ für R⁵ steht, gewinnen. Die Herstellungsmethoden richten nach den spezifischen Eigenschaften des abzuspaltenden Restes R¹ (der für R⁵ steht), nach allgemein bekannten Verfahren. Beispielhaft seien aufgeführt die Abspaltung von R⁵ = Benzyl durch Hydrierung oder von R⁵ = Methyl oder Ethyl durch Umsetzung mit Trimethylsilylbromid bzw. Trimethylsilyljodid in einem geeigneten organischen Lösungsmittel wie etwa Dioxan bei Raumtemperatur.

Durch die nachfolgenden Ausführungsbeispiele und durch den Inhalt der Patentansprüche wird die vorliegende Erfindung näher erläutert.

### Beispiele

### Beispiel 1

### Bis-(N-tert-butoxycarbonyl-aminomethyl)-phosphinsäure (1)

Zu einer Lösung von Bis-(aminomethyl)-phosphinsäure-hydrochlorid (2,00 g; 12,46 mmol) in Wasser (20 ml) und Dioxan (20 ml) werden bei 0°C unter Rühren nacheinander 1,0 M wäßrige Natronlauge (37,6 ml; 37,60 mmol) und tert- Butoxycarbonylanhydrid (5,69 g; 26,10 mmol) in Dioxan (3 ml) gegeben. Die Reaktionslösung wird auf Raumtemperatur erwärmt und nach einer Stunde unter vermindertem Druck auf ein Volumen von ca. 40 ml eingeengt. Die Lösung wird mit Ethylacetat (40 ml) versetzt und mit gesättigter wäßriger KHSO₄-Lösung auf einen pH-Wert von 2-3 angesäuert. Die abgetrennte wäßrige Phase wird mit Ethylacetat (4 x 50 ml) extrahiert. Die vereinigte organische Phase wird über Na₂SO₄ getrocknet und unter vermindertem Druck eingeengt. Man erhält die Phosphinsäure 1 (3,20 g) als Rohprodukt.
¹H-NMR (δ/ppm/)(200 MHz, CDCl₃): 1,48 (18H, s, (CH₃)₃C); 3,53 (4H, bd, J 7,5 Hz, PCH₂); 5,70 (1H, bs, NH); 6,25 (1H, bs, NH);
MS (FAB, NBA, m/e): 325 (M+H⁺), 269 (M-55), 213 (269-56)(100%).

### Beispiel 2

### Bis-(N-benzoyl-aminomethyl)-phosphinsäure (2)

Zu einer Lösung von Bis-(aminomethyl)-phosphinsäure-hydrochlorid (1,20 g; 7,48 mmol) in Pyridin (8 ml) wird bei 0°C unter Rühren langsam Benzoylchlorid (1,8 ml; 15,49 mmol) gegeben. Das Reaktionsgemisch wird unter vermindertem Druck eingeengt. Der Rückstand wird in 5-proz. Salzsäure (60 ml) aufgenommen. Die wäßrige Phase wird mit Ethylacetat (3 x 60 ml) extrahiert. Die vereinigten organischen Phasen werden getrocknet (Natriumsulfat) und unter vermindertem Druck eingeengt. Man erhält die Phosphinsäure 2 (1,95 g) als Rohprodukt.
¹H-NMR (δ/ppm/)(200 MHz, DMSO-d₆): 3,55 (4H, bd, J 7,5 Hz, PCH₂); 7,20-8,10 (10H, m, Harom.);
MS (FAB, NBA, m/e): 333 (M+H⁺)(100%).

### Beispiel 3

### Bis-(N-tert-butoxycarbonyl-aminomethyl)-phosphinsäure-ethylester (3)

Zu einer unter Rückfluß siedenden Lösung der Phosphinsäure 1 (270 mg, 0,83 mmol) in trockenem THF (4 ml) und abs. Ethanol (0,30 ml, 5,15 mmol) wird DCC (190 mg, 0,92 mmol) in THF (4 ml) innerhalb von 4 Minuten zugetropft. Nach 1,5 Stunden (Kontrolle per DC) wird die Reaktionslösung auf Raumtemperatur abgekühlt und filtriert. Der Filterrückstand wird mit Ether gewaschen. Das Filtrat wird mit Wasser (2 x 20 ml) extrahiert. Die organische Phase wird über Na₂SO₄ getrocknet und unter vermindertem Druck eingeengt.

Nach säulenchromatographischer Reinigung an Kieselgei (Ethylacetat/Heptan = 3/2) erhält man den Phosphinsäureester 3 (100 mg, 34% d.Th.). Fp 117,5-120°C.
¹H-NMR (δ/ppm/)(200 MHz, CDCl₃): 1,30 (3H, t, J 7 Hz, CH₂CH₃); 1,45 (18H, s, (CH₃)₃C); 3,23 (2H, dt, J 15 und 5 Hz, PCH₂); 3,84 (2H, m, PCH₂); 4,18 (2H, dq, J 6 und 6 Hz, OCH₂); 5,48 (2H, bs, NH);
MS (FAB, NBA, m/e): 353 (M+H⁺); 297; 241 (100%).

### Beispiel 4

### Bis-(N-tert-butoxycarbonyl-aminomethyl)-phosphinsäure-ethylester (3)

Zu einer Lösung der Phosphinsäure 1 (3,200 g, 9,88 mmol) in einem Gemisch von Methylenchlorid (50 ml), Ethanol (3,00 ml, 51,59 mmol), Triethylamin (1,40 ml, 10,06 mmol), und N,N-Dimethylpyridin (10 mg) wird bei 0°C unter Rühren Chlorameisensäure-iso-butyl-ester (1,50 ml, 11,48 mmol) zugetropft. Nach 90 Minuten wird die Reaktionslösung mit gesättigter wäßriger Ammoniumchlorid- Lösung (30 ml) und gesättigter wäßriger KHCO₃-Lösung (30 ml) extrahiert. Die organische Phase wird über Na₂SO₄ getrocknet und unter verminderten Druck eingeengt. Nach säulenchromatographischer Reinigung an Kieselgel (Ethylacetat/Heptan = 3/2) erhält man den Phosphinsäureester 3 (1,840 g, 53% d.Th.). Spektroskopische Daten s. o.

### Beispiel 5

### Bis-(N-benzoyl-aminomethyl)-phosphinsäure-ethylester (4)

In Analogie zu Beispiel 4 wurde aus der Phosphinsäure 2 mit einer Ausbeute von 47% der Phosphinsäure-ethylester 4 hergestellt.
¹H-NMR (δ/ppm/)(200 MHz, DMSO-d₆): 1,31 (3H, t, J 7 Hz, CH₂CH₃); 3,25 (2H, dt, J 15 und 5 Hz, PCH₂); 3,87 (2H, m, PCH₂); 4,19 (2H, dq, J 6 und 6 Hz, OCH₂); 7,18-8,10 (10H, m, Harom.);
MS (FAB, NBA, m/e): 361 (M+H⁺)(100%).

### Beispiel 6

### Bis-(N-tert-butoxycarbonyl-aminomethyl)-phosphinsäure-benzylester (5)

In Analogie zu Beispiel 4 wurde aus der Phosphinsäure 1 und Benzylalkohol mit einer Ausbeute von 55% der Phosphinsäure-benzylester 5 hergestellt.
¹H.NMR (δ/ppm/)(200 MHz, DMSO-d₆): 1,44 (18H, s, (CH₃)₃Cl; 3,28 (2H, dt, J 15 und 5 Hz, PCH₂); 3,88 (2H, m, PCH₂); 5,13 (2H, d, J 6 Hz, CH₂Ph); 5,25 (2H, m, NH); 7,15-7,45 (10H, m, Harom.);
MS (FAB, NBA, m/e): 415 (M+H⁺)(100%).

### Beispiel 7

### Bis-(N-tert-butoxycarbonyl-amino(bromo)methyl)-phosphinsäure-ethylester (6)

Der Boc-geschützte Phosphinsäureester 3 (120 mg, 0,34 mmol) und N-Bromsuccinimid (121 mg, 0,68 mmol) werden in Tetrachlorkohlenstoff (15 ml) 2 Stunden unter Kühlung (20°C) mit einer 300-Watt-Glühlampe bestrahlt. Das ausgefallene Succinimd wird abgesaugt. nach Einengen unter vermindertem Druck erhält man den Brom-phosphinsäureester 6 (167 mg, 96% d.Th.).
¹H-NMR (δ/ppm/)(200 MHz, CDCl₃): 1,30 (3H, t, J 7 Hz, CH₂CH₃); 1,45 (18H, s, (CH₃)₃C); 4,18 (2H, dq, J 6 und 6 Hz, OCH₂); 6,45 (2H, m, PCH).

### Beispiel 8

### Bis-(N-benzoyl-amino(bromo)methyl)-phosphinsäure-ethylester (7)

In Analogie zu Beispiel 7 wird aus dem N-benzoyl-geschützten Phosphinsäureester 4 der Brom-phosphinsäureester 7 erhalten und als Rohprodukt weiter umgesetzt.
¹H-NMR (δ/ppm/)(200 MHz, CDCl₃): 1,28 (3H, t, J 7 Hz, CH₂CH₃); 4,20 (2H, m, OCH₂); 6,45 (2H, m, PCH); 7,20-7,80 (12 H, m, Harom.+ 2xNH).

### Beispiel 9

### Bis-(N-tert-butoxycarbonyl-amino(bromo)methyl)-phosphinsäure-benzylester (8)

In Analogie zu Beispiel 7 wird aus dem N-Boc-geschützten Phosphinsäurebenzylester 5 der Brom-phosphinsäureester 8 erhalten und als Rohprodukt weiter umgesetzt.
¹H-NMR (δ/ppm/)(200 MHz, CDCl₃): 1,44 (18H, s, (CH₃)₃C); 5,15 (2H, m, CH₂Ph); 6,45 (2H, m, PCH); 7,12-7,50 (5H, m, Harom.).

### Beispiel 10

### (N-tert-butoxycarbonyl-amino(bromo)methyl)-(N-tert-butoxycarbonylaminomethyl)-phosphinsäure-benzylester (9)

In Analogie zu Beispiel 7 wird aus dem N-Boc-geschützten Phosphinsäurebenzylester 5 unter Verwendung von nur einem Equivalent N-Bromsuccinimid der monosubstituierte Brom-phosphinsäureester 9 erhalten und als Rohprodukt weiter umgesetzt.
¹H-NMR (δ/ppm/)(200 MHz, CDCl₃): 1,44 (18H, s, (CH₃)₃C); 3,85 (2H, m, PCH₂) 5,13 (2H, m, CH₂Ph); 6,44 (1H, m, PCH); 7,12-7,50 (5H, m, Harom.).

### Beispiel 11

### Bis-(N-tert-butoxycarbonyl-1-amino-2-phenyl-ethyl)-phosphinsäure-ethylester (10)

Zu einer bei -78°C unter einer Argonatmosphäre gerührten Lösung des Bromids 6 (340 mg; 0,67 mmol) in THF (10 ml) wird eine 2,00 N Benzylmagnesiumchlorid- Lösung (1,35 ml; 2,70 mmol) in THF zugetropft. Nach 3 Stunden Rühren bei -70°C wird die Reaktionslösung auf Raumtemperatur erwärmt und mit gesättigter wäßriger Ammoniumchlorid-Lösung (50 ml) versetzt. Die wäßrige Phase wird mit Ethylacetat (3 x 60 ml) extrahiert. Die vereinigte organische Phase wird über Na₂SO₄ getrocknet und unter vermindertem Druck eingeengt. Nach säulenchromatographischer Reinigung an Kieselgel (Ethylacetat/Heptan) erhält man die bisalkylierten Phosphinsäureester 10 (105 mg, 30% d.Th.).
¹H-NMR (δ/ppm/)(200 MHz, CDCl₃): 1,35 (3H, t, J 7 Hz, CH₂CH₃); 1,45 (18H, s, (CH₃)₃C); 3.05 (2H, m, CH₂Ph); 3,45 (2H, m, CH₂Ph); 4,15-4,30 (4H, m, OCH₂ + 2 × CH-CH₂Ph); 6,90-8,00 (10H, m, Harom.);
MS (FAB, NBA, m/e): 532 (M+H⁺)(100%).

### Beispiel 12

### Bis-(N-benzoyl-amino(2-cyclohexanon)methyl)-phosphinsäure-ethylester (11)

Zu einer bei -78°C unter einer Argonatmosphäre gerührten Lösung des Bromids 7 (210 mg; 0,41 mmol) in absolutem THF wird N-Ethyl-diisopropylamin (140 ul; 0,82 mmol) zugetropft. Nach 2 Stunden wird zur Reaktionslösung tropfenweise 1-Morpholino-1-cyclohexen (138 ul; 0,82 mmol) in THF (10 ml) zugegeben. Man erwärmt innerhalb von 8 Stunden auf Raumtemperatur und hydrolisiert mit 10-proz. wäßriger Citronensäure (30 ml). Nach Neutralisation mit gesättigter, wäßriger NaHCO₃-Lösung, Extraktion mit Essigester, Trocknen über Na₂SO₄, Einengen unter vermindertem Druck und säulenchromatographischer Reinigung erhält man ein Gemisch der diastereomeren Phosphinsäureester 11 (79 mg, 35%d.Th.)
¹H-NMR (δ/ppm/)(200 MHz, CDCl₃): 1,30 (3H, m, CH₃/Diastereomerengemisch/); 1,45-2,37 (16H, m, -(CH₂)₄-); 3,18 (2H, m, CHCO); 4,20 (2H, m, OCH₂); 4,72 (2H, m, PCH); 7,20-7,80 (12H, m, Harom.+ 2NH);
MS (FAB, NBA, m/e): 553 (M+H⁺)(100%).

### Beispiel 13

### Bis-(N-tert-butoxycarbonyl-amino(phenyl)methyl)-phosphinsäure-benzylester (12)

In Analogie zu Beispiel 11 wird aus dem bis-substituierten Brom- phosphinsäure-benzylester 8 und einer 2,0N Phenylmagnesiumchlorid-Lösung der Phosphinsäure- benzylester 12 mit einer Ausbeute von 32% hergestellt.
MS (FAB, NBA, m/e): 567 (M+H⁺)(100%).

### Beispiel 14

### (N-tert-butoxycarbonyl-aminomethyl)-(N-tert-butoxycarbonyl-amino(phenyl) methyl)-phosphinsäure-benzylester (13)

In Analogie zu Beispiel 11 wird aus dem mono-substituierten Brom-phosphinsäure- benzylester 9 und einer 2,ON Phenylmagnesiumchlorid-Lösung der Phosphinsäure- benzylester 13 mit einer Ausbeute von 29% hergestellt.
MS (FAB, NBA, m/e): 491 (M+H⁺)(100%).

### Beispiel 15

### Bis-(N-benzoyl-amino(diethoxyphosphoryl)methyl)-phosphinsäure-ethylester (14)

Eine Lösung des Bromids 7 (195 mg; 0,38 mmol) und Triethylphosphit (130 ul; 0,76 mmol) in abs. THF (50 ml) wird nach 4 Stunden Rühren bei Raumtemperatur unter vermindertem Druck eingeengt. Man erhält ein Gemisch der diastereomeren Phosphinsäureester 14 (145 mg, 64% d.Th. nach Umkristallisation aus Essigester).
¹H-NMR (δ/ppm/)(200 MHz, CDCl₃): 1,30 (15H, m, CH₃); 4,18 (10H, m, OCH₂); 5,15 (2H, m, PCH); 7,10-7,80 (12H, m, Harom. + 2NH);
MS (FAB, NBA, m/e): 601 (M+H⁺)(100%).

### Beispiel 16

### Bis-(1-Amino-2-phenyl-ethyl)-phoshinsäure-ethylester-hydrochlorid (15)

Zu einer Lösung des bisalkylierten Phosphinsäureesters 10 (103 mg, 0,19mol) in Methanol (5 ml) wird unter Rühren bei Raumtemperatur eine ca. 3 N methanolische Salzsäure (10 ml) gegeben. Nach 3 Stunden wird die Reaktionslösung unter vermindertem Druck eingeengt. Man erhält das Phosphinsäureester-hydrochlorid 15 (69 mg, 97% d. Th.).
¹H-NMR (δ/ppm/)(200 MHz, DMSO-d₆): 1,15 (3H, m, CH₃); 3,05 (4H, m, CH₂Ph); 3,93 (1H, m, CH); 4,14-4,45 (3H, m, CH + OCH₂); 7,20-7,45 (10H, m, H _{arom.}); 8,70 (6H, bs, NH₃+);
MS (FAB, NBA, m/e): 333 (M+H⁺); 214; 120(100%).

### Beispiel 17

### Bis-(1-Amino-2-phenyl-ethyl)-phosphinsäure-hydrochlorid (16)

Eine Lösung des bisalkylierten Phosphinsäuresters 10 (170 mg, 0,32 mmol) in 37-proz. wäßriger Salzsäure (20 ml) wurde für 6 Stunden auf eine Temperatur von ca. 100°C erwärmt. Nach Einengen der Reaktionslösung unter vermindertem Druck und wiederholtem Koevaporieren mit Methanol und Toluen erhält man das Phosphinsäure-hydrochlorid 16 (101 mg, 93% d.Th.).
¹H-NMR (δ/ppm/)(200 MHz, DMSO-d₆): 3,03 (4H, m, CH₂Ph); 3,95 (1H, m, CH); 4,21 (1H, m, CH); 7,20-7,45 (10H, m, Harom.); 8,72 (6H, bs, NH₃+); MS (FAB, NBA, m/e): 305 (M+H⁺); 120 (100%).

## Patentansprüche

1. Verfahren zur Herstellung von Verbindungen der Formel VI 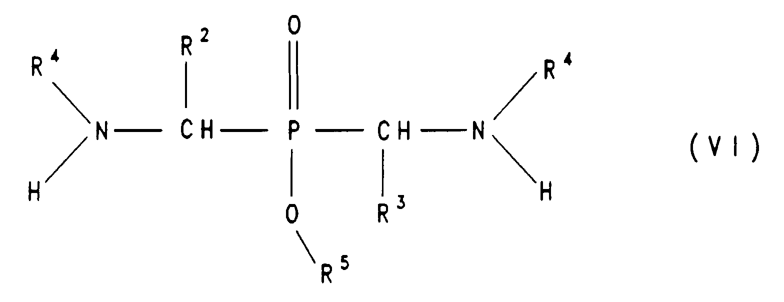
worin R² und R³, unabhängig voneinander stehen für Wasserstoff, (C₁-C₁₈)-Alkyl, (C₂-C₁₈)-Alkenyl, (C₂-C₁₈)-Alkinyl, wobei Alkyl, Alkenyl und Alkinyl jeweils ein oder mehrfach mit Fluor, Chlor, Brom, COOH, Oxo, NO₂, NH₂, NHC(O)-(C₁-C₆)-Alkyl, NHC(O)-(C₆-C₁₂)-Aryl, CN, OH, CHO, CH-[(C₁-C₆)-Alkoxy]₂, COOH, SO₃H, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, (C₁-C₆)-Alkoxy substituiert sein können,
für (C₆-C₁₂)-Aryl, (C₇-C₂₂)-Arylalkyl, wobei Aryl ein oder mehrfach mit Fluor, Chlor, Brom, NO₂, NH₂, NHC(O)-(C₁-C₆)-Alkyl, NHC(O)-(C₆-C₁₂)-Aryl, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl substituiert sein kann, oder für P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten und wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl oder O-C(O)-(C₆-C₁₂)-Aryl substituiert sein kann,
wobei R² und R³ nicht gleichzeitig für Wasserstoff stehen,
R⁴ bedeutet eine Schutzgruppe für die Aminofunktion und
R⁵ steht für (C₁-C₁₈)-Alkyl, (C₂-C₁₈)-Alkenyl, (C₂-C₁₈)-Alkinyl, (C₆-C₁₂)-Aryl, (C₇-C20)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl substituiert sein kann,
dadurch gekennzeichnet, daß eine Verbindung der Formel IV 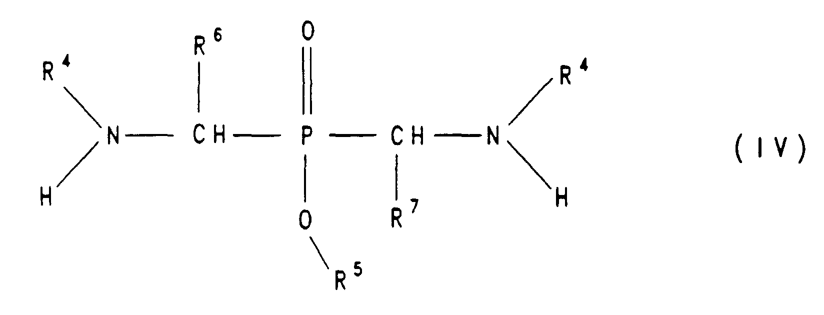 in der R⁴ und R⁵ die obengenannte Bedeutung haben und
R⁶ und R⁷ unabhängig voneinander stehen für H, Cl oder Br, wobei nicht beide Reste gleichzeitig Wasserstoff bedeuten
a) durch Reaktion mit einer Base in eine Verbindung der Formel Va oder Vb umgesetzt wird, 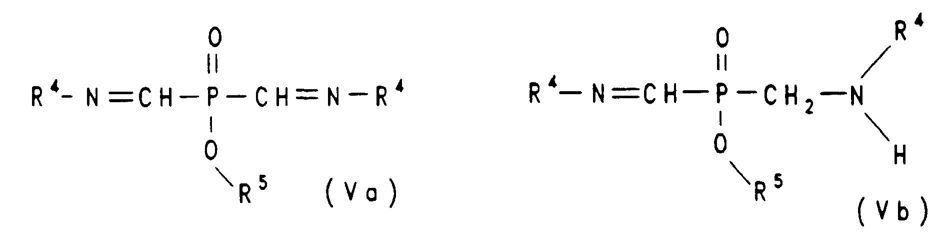 wobei R⁴ und R⁵ die obengenannten Bedeutungen haben und zur Herstellung der Verbindung VI eine Verbindung der Formel Va oder Vb mit C-Nucleophilen, umgesetzt wird, oder
b) die Verbindung der Formel VI durch direkte Umsetzung einer Verbindung der Formel IV mit R²₂Cu(CN)Li₂, R²Li, R²MgX, R²ZnX, R²₂Zn, R²₄₋ₙTiR²²n (n<4), P[O-R²³]₃, wobei R² die obengenannte Bedeutung hat, R²² steht für N-[(C₁-C₆)-Alkyl]₂, O-(C₁-C₆)-Alkyl, O-(C₆-C₁₂)-Aryl, wobei Aryl mit Fluor, Chlor, Brom, NO₂, NH₂ bzw. geschützte Form, CN, OH, COOH, C(O)-O-(C₁-C₆)-Alkyl, (C₁-C₆)-Alkyl, (C₁-C₆)-Alkoxy substituiert sein kann, oder für ein Weinsäurederivat und R²³ bedeutet (C₁-C₆)-Alkyl, (C₆-C₁₂)-Aryl, (C₇-C₁₃)-Arylalkyl, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-(C₁-C₆)-Alkyl, O-C(O)-(C₁-C₆)-Alkyl substituiert sein kann, und X eine Abgangsgruppe bedeutet, hergestellt wird.

2. Verfahren gemäß Anspruch 1, dadurch gekennzeichnet, daß R² und R³ unabhängig voneinander stehen für (C₁-C₆)-Alkyl, (C₂-C₆)-Alkenyl, (C₂-C₆)-Alkinyl, wobei Alkyl ein- oder mehrfach mit Oxo, Fluor, Chlor, Brom, COOH, C(O)-(C₁-C₆)-Alkyl, C(O)-O-(C₁-C₆)-Alkyl substituiert sein kann, (C₆-C₁₂)-Aryl, (C₇-C₁₃)-Arylalkyl wobei Aryl ein- oder mehrfach mit Chlor, Brom, CN, (C₁-C₃)-Alkoxy substituiert sein kann; P(O)[OH]₂, P(O)(OR²³)₂ wobei R²³ unabhängig voneinander (C₁-C₆)-Alkyl, (C₆-C₁₂)-Aryl oder (C₇-C₁₃)-Arylalkyl bedeuten, insbesondere stehen R¹ und R² für (C₁-C₆)-Alkyl, (C₂-C₆)-Alkenyl, (C₂-C₆)-Alkinyl, Benzyl, P(O)[OH]₂ oder P(O)[O-(C₁-C₆)-Alkyl]₂ bedeuten, und R⁵ steht für (C₁-C₄)-Alkyl, (C₂-C₄)-Alkenyl, Phenyl, Benzyl, insbesondere steht R⁵ für (C₁-C₄)-Alkyl oder Benzyl.

3. Verfahren gemäß den Ansprüchen 1 oder 2, dadurch gekennzeichnet, daß die Base bei der Umsetzung einer Verbindung der Formel IV ein Tri-(C₁-C₆)-alkyl-amin, Pyridin, Butyllithium, Lithiumdiisopropylamin (LDA), Natriumhydrid, Natriumamid, Kalium-tert.-butylat, Natriumamid-R(21)ONa, wobei R(21) für (C₂-C₆)-Alkyl oder CH₃CH₂-O-CH₂CH₂ steht oder ungeladene, peralkylierte Polyamino-Phosphazen-Basen, insbesondere ein Tri-(C₁-C₃)-alkylamin oder Pyridin ist.

4. Verfahren gemäß einem oder mehreren der Ansprüche 1-3, dadurch gekennzeichnet, daß die C-Nucleophilen aus CH-aciden Verbindungen der Formeln Vlla, Vllb, VIII oder IX 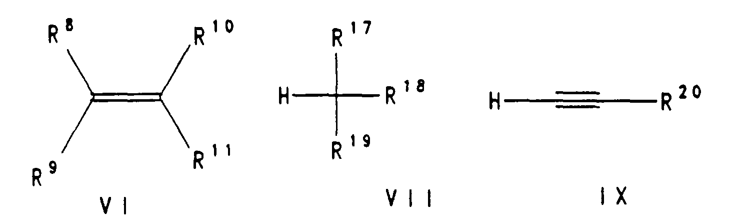 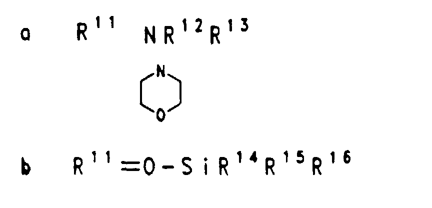
R⁸, R⁹, R¹⁰, gleich oder unabhängig voneinander, stehen für Wasserstoff, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl. Dabei können Alkyl, Alkenyl, Alkinyl und Aryl ein oder mehrfach mit Fluor, Chlor, Brom, NO₂, NH₂ bzw. geschützte Form [Greene, Protective Groups in Organic Synthesis, Wiley 1979], (C₁-C₆)-Alkyl, (C₁-C₆)-Alkoxy, CN, OH, CHO, CH[(C₁-C₆)-Alkoxy]₂, COOH, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl substituiert sein.
R¹², R¹³, R¹⁴, R¹⁵ und R¹⁶ sind gleich oder unabhängig voneinander und stehen für (C₁-C₆)-Alkyl, (C₆-C₁₂)-Aryl, wobei Alkyl und Aryl ein oder mehrfach mit Fluor, Chlor, Brom, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann. R¹⁷ steht für Wasserstoff, (C₁-C₆)-Alkyl, wobei Alkyl ein oder mehrfach mit Fluor, Chlor, Brom, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann. R¹⁸ und R¹⁹, gleich oder unabhängig voneinander, stehen für Wasserstoff, CN, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, wobei Alkyl und Aryl ein oder mehrfach mit Fluor, Chlor, Brom, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl, O-C(O)-(C₆-C₁₂)-Aryl, substituiert sein kann, mit der Maßgabe, daß für R¹⁸ = Wasserstoff R¹⁹ nicht ebenfalls für Wasserstoff steht und umgekehrt.
R²⁰ steht für Wasserstoff, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl. Dabei können Alkyl, Alkenyl, Alkinyl und Aryl ein oder mehrfach mit Fluor, Chlor, Brom, NO₂, NH₂ bzw. geschützte Form [Greene, Protective Groups in Organic Synthesis, Wiley 1979], (C₁-C₆)-Alkyl, (C₁-C₆)-Alkoxy, CN, OH, CHO, CH-[(C₁-C₆)-Alkoxy]₂, COOH, C(O)-O-(C₁-C₆)-Alkyl, C(O)-O-(C₆-C₁₂)-Aryl, C(O)-(C₁-C₆)-Alkyl , C(O)-(C₆-C₁₂)-Aryl, O-C(O)-(C₁-C₆)-Alkyl, O-C(O)-(C₆-C₁₂)-Aryl substituiert sein,
oder daß die C-Nucleophilen metallorganische Verbindungen sind, ausgewählt aus der Gruppe R²₂Cu(CN)Li₂, R²Li, R²MgX, R²ZnX, R²₂Zn und R²₄₋ₙTiR²²ₙ (n<4), wobei R² und R²² die obengenannten Bedeutungen haben und X eine Abgangsgruppe bedeutet.

5. Verbindungen der Formel VI 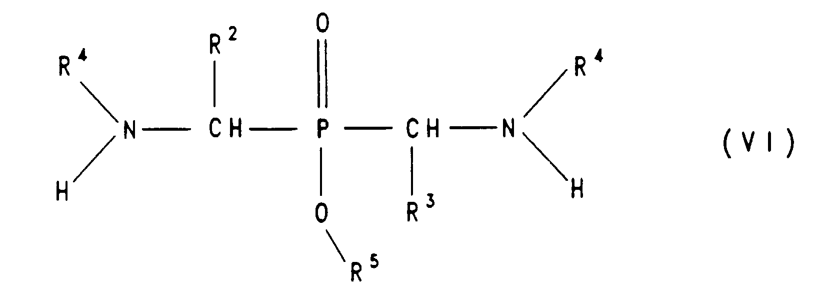
worin R² und R³, unabhängig voneinander stehen für P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl oder O-C(O)-(C₆-C₁₂)-Aryl substituiert sein kann,
R⁴ bedeutet eine Schutzgruppe für die Aminofunktion und
R⁵ steht für (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl , C(O)-O-(C₆-C₁₂)-Aryl, C(O)-(C₁-C₆)-Alkyl C(O)-(C₆-C₁₂)-Aryl, O-C(O)-(C₁-C₆)-Alkyl oder O-C(O)-(C₆-C₁₂)-Aryl substituiert sein können.

6. Verbindungen der Formel VI gemäß Anspruch 5, dadurch gekennzeichnet, daß R² und R³ unabhängig voneinander P(O)[OH]₂, P(O)[O-(C₁-C₄)-Alkyl]₂, P(O)[O-(C₆-C₁₂)-Aryl]₂ oder P(O)[O-(C₇-C₁₃)-Arylalkyl]₂ bedeuten und
R⁵ steht für (C₁-C₆)-Alkyl, (C₆-C₁₂)-Aryl oder (C₇-C₁₃)-Arylalkyl, wobei Aryl mit Cl, Br oder (C₁-C₃)-Alkyl substituiert sein kann.

7. Verbindungen der Formel I 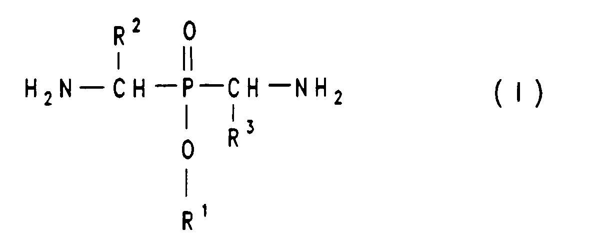 dadurch gekennzeichnet, daß
R¹ H, (C₁-C₁₈)-Alkyl, (C₂-C₁₈)-Alkenyl, (C₂-C₁₈)-Alkinyl, (C₆-C₁₂)-Aryl, (C₇-C₂₀)-Arylalkyl, wobei Alkyl, Alkenyl, Alkinyl und Aryl ein oder mehrfach mit Fluor, Chlor, Brom, Oxo, NO₂, NH₂ bzw. geschützte Form, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl , C(O)-(C₆-C₁₂)-Aryl, O-C(O)-(C₁-C₆)-Alkyl, O-C(O)-(C₆-C₁₂)-Aryl substituiert sein können, bedeutet und
R² und R³ unabhängig voneinander stehen für P(O)[OH]₂, P(O)(OR²³)₂, wobei R²³ unabhängig voneinander (C₁-C₆)-Alkyl, (C₆-C₁₂)-Aryl oder (C₇-C₁₃)-Arylalkyl bedeuten, wobei Aryl ein oder mehrfach mit Fluor, Chlor, Brom, NO₂, CN, OH, COOH, (C₁-C₆)-Alkyl, (C₁-C₆)-Alkoxy, C(O)-O-(C₁-C₆)-Alkyl, C(O)-O-(C₆-C₁₂)-Aryl, C(O)-(C₁-C₆)-Alkyl, C(O)-(C₆-C₁₂)-Aryl, O-C(O)-(C₁-C₆)-Alkyl oder O-C(O)-(C₆-C₁₂)-Aryl substituiert sein kann.

8. Verbindungen der Formel 1 gemäß Anspruch 7, dadurch gekennzeichnet, daß
R¹ H, C₁-C₆)-Alkyl, (C₆-C₁₂)-Aryl, (C₇-C₁₃)-Arylalkyl, wobei Aryl mit Cl, Br, oder (C₁-C₃)-Alkyl substituiert sein kann, bedeutet, und
R² und R³ unabhängig voneinander P(O)[OH]₂, P(O)[O-(C₁-C₄)-Alkyl]₂, P(O)[O-(C₆-C₁₂)-Aryl]₂ oder P(O)[O-(C₇-C₁₃)-Arylalkyl]₂ bedeuten.

## Claims

1. A process for the preparation of compounds of the formula VI 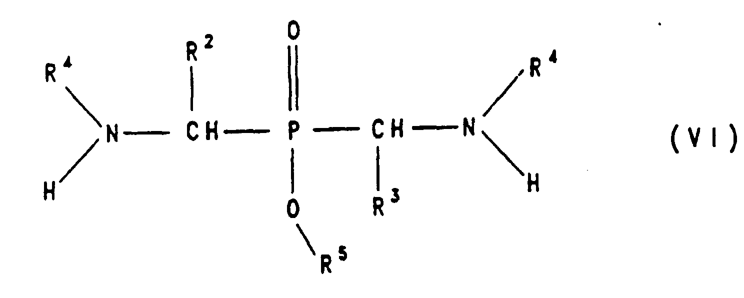
in which R² and R³, independently of one another, are hydrogen, (C₁-C₁₈)-alkyl, (C₂-C₁₈)-alkenyl, (C₂-C₁₈)-alkynyl, where alkyl, alkenyl and alkynyl can in each case be substituted one or more times by fluorine, chlorine, bromine, COOH, oxo, NO₂, NH₂, NHC(O)-(C₁-C₆)-alkyl, NHC(O)-(C₆-C₁₂)-aryl, CN, OH, CHO, CH-[(C₁-C₆)-alkoxy]₂, COOH, SO₃H, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl, (C₁-C₆)-alkoxy,
are (C₆-C₁₂)-aryl, (C₇-C₂₂)-arylalkyl, where aryl can be substituted one or more times by fluorine, chlorine, bromine, NO₂, NH₂, NHC(O)-(C₁-C₆)-alkyl, NHC(O)-(C₆-C₁₂)-aryl, CN, OR, COOH, (C₁-C₆)-alkyl, (C₁-C₆)-alkoxy, C (O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl, or are P(O)[OH]₂, P(O) (OR²³)₂, where R²³ independently of one another is (C₁-C₆)-alkyl, (C₆-C₁₂)-aryl or (C₇-C₁₃)-arylalkyl and where aryl can be substituted one or more times by fluorine, chlorine, bromine, NO₂, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl or O-C(O)-(C₆-C₁₂)-aryl,
where R² and R³ are not simultaneously hydrogen,
R⁴ is a protective group for the amino function and
R⁵ is (C₁-C₁₈)-alkyl, (C₂-C₁₈)-alkenyl, (C₂-C₁₈)-alkynyl, (C₆-C₁₂)-aryl, (C₇-C₂₀)-arylalkyl, where alkyl, alkenyl, alkynyl and aryl can be substituted one or more times by fluorine, chlorine, bromine, oxo, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl,
which comprises converting a compound of the formula IV 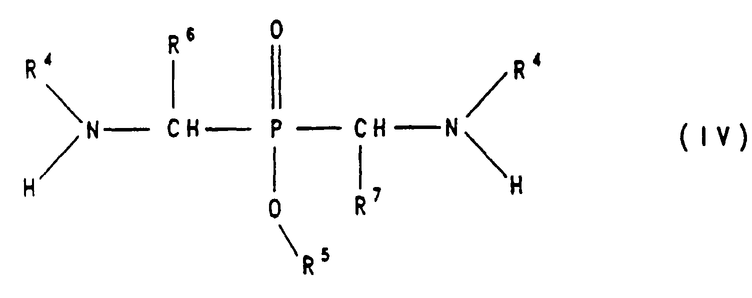 in which R⁴ and R⁵ have the abovementioned meaning and
R⁶ and R⁷ independently of one another are H, Cl or Br, where not both radicals are simultaneously hydrogen
a) by reaction with a base to a compound of the formula Va or Vb 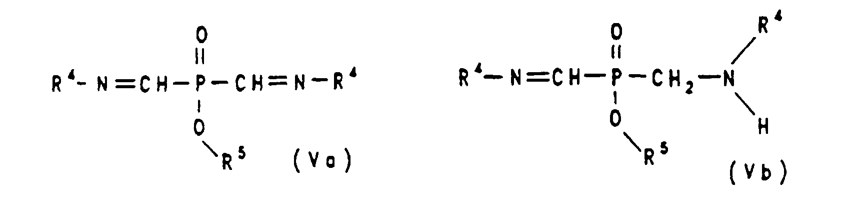 where R⁴ and R⁵ have the abovementioned meanings and for the preparation of the compound VI a compound of the formula Va or Vb is reacted with carbon nucleophiles, or
b) the compound of the formula VI is prepared by direct reaction of a compound of the formula IV with R²₂Cu(CN)Li₂, R²Li, R²MgX, R²ZnX, R²₂Zn, R²₄₋ₙTiR²²ₙ (n<4), P[O-R²³]₃, where R² has the abovementioned meaning, R²² is N-[(C₁-C₆)-alkyl]₂, O-(C₁-C₆)-alkyl, O-(C₆-C₁₂)-aryl, where aryl can be substituted by fluorine, chlorine, bromine, NO₂, NH₂ or protected form, CN, OH, COOH, C(O)-O-(C₁-C₆)-alkyl, (C₁-C₆)-alkyl, (C₁-C₆)-alkoxy, or is a tartaric acid derivative and R²³ is (C₁-C₆)-alkyl, (C₆-C₁₂)-aryl, (C₇-C₁₃)-arylalkyl, where aryl can be substituted one or more times by fluorine, chlorine, bromine, NO₂, CN, OH, COOH, (C₁-C₆)-alkyl, (C₁-C₆)-alkoxy, C(O)-O-(C₁-C₆)-alkyl, C(O)-(C₁-C₆)-alkyl, O-C(O)-(C₁-C₆)-alkyl, and X is a leaving group.

2. The process as claimed in claim 1, wherein R² and R³ independently of one another are (C₁-C₆)-alkyl, (C₂-C₆)-alkenyl, (C₂-C₆)-alkynyl, where alkyl can be substituted one or more times by oxo, fluorine, chlorine, bromine, COOH, C(O)-(C₁-C₆)-alkyl, C(O)-O-(C₁-C₆)-alkyl, (C₆-C₁₂)-aryl, (C₇-C₁₃)-arylalkyl, where aryl can be substituted one or more times by chlorine, bromine, CN, (C₁-C₃)-alkoxy; P(O)[OH]₂, P(O)(OR²³)₂, where R²³ independently of one another is (C₁-C₆)-alkyl, (C₆-C₁₂)-aryl or (C₇-C₁₃)-arylalkyl, in particular R² and R³ are (C₁-C₆)-alkyl, (C₂-C₆)-alkenyl, (C₂-C₆)-alkynyl, benzyl, P(O)[OH]₂ or P(O) [O-(C₁-C₆)-alkyl]₂, and R⁵ is (C₁-C₄)-alkyl, (C₂-C₄)-alkenyl, phenyl, benzyl, in particular R⁵ is (C₁-C₄)-alkyl or benzyl.

3. The process as claimed in claim 1 or 2, wherein the base in the reaction of a compound of the formula IV is a tri-(C₁-C₆)-alkylamine, pyridine, butyllithium, lithium diisopropylamide (LDA), sodium hydride, sodium amide, potassium tert-butoxide, sodium amide-R²¹ONa, R²¹ being (C₂-C₆)-alkyl or CH₃CH₂-O-CH₂CH₂, or uncharged, peralkylated polyaminophosphazene bases, in particular a tri-(C₁-C₃)-alkylamine or pyridine.

4. The process as claimed in one or more of claims 1-3, wherein the carbon nucleophiles are produced from CH-acidic compounds of the formula VIIa, VIIb, VIII or IX 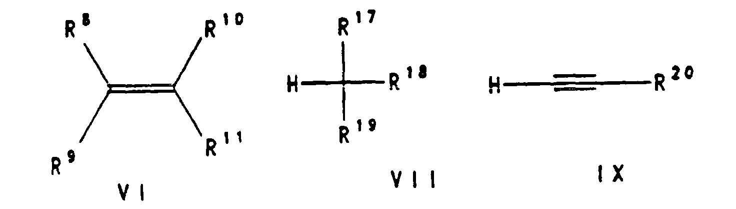 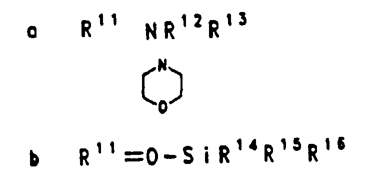
R⁸, R⁹, R¹⁰, identically to or independently of one another, are hydrogen, (C₁-C₁₈)-alkyl, (C₂-C₁₈)-alkenyl, (C₂-C₁₈)alkynyl, (C₆-C₁₂)-aryl, (C₇-C₂₀)-arylalkyl. In this case alkyl, alkenyl, alkynyl and aryl can be substituted one or more times by fluorine, chlorine, bromine, NO₂, NH₂ or protected form [Greene, Protective Groups in Organic Synthesis, Wiley 1979], (C₁-C₆)-alkyl, (C₁-C₆)-alkoxy, CN, OH, CHO, CH-[(C₁-C₆)-alkoxy]₂, COOH, C(O)-O-(C₁-C₆) -alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl.
R¹², R¹³, R¹⁴, R¹⁵ and R¹⁶ are identical to or independent of one another and are (C₁-C₆)-alkyl, (C₆-C₁₂)-aryl, where alkyl and aryl can be substituted one or more times by fluorine, chlorine, bromine, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl.
R¹⁷ is hydrogen, (C₁-C₆)-alkyl, where alkyl can be substituted one or more times by fluorine, chlorine, bromine, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl. R¹⁸ and R¹⁹, identically to or independently of one another, are hydrogen, CN, C(O)-O-(C₁-C₆)-alkyl, C(O)-O-(C₆-C₁₂)-aryl, C(O)-(C₁-C₆)-alkyl, C(O)-(C₆-C₁₂)-aryl, where alkyl and aryl can be substituted one or more times by fluorine, chlorine, bromine, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl, with the proviso that for R¹⁸ = hydrogen, R¹⁹ cannot also be hydrogen and conversely.
R²⁰ is hydrogen, (C₁-C₁₈)-alkyl, (C₂-C₁₈)-alkenyl, (C₂-C₁₈)-alkynyl, (C₆-C₁₂)-aryl, (C₇-C₂₀)-arylalkyl. In this case alkyl, alkenyl, alkynyl and aryl can be substituted one or more times by fluorine, chlorine, bromine, NO₂, NH₂ or protected form, [Greene, Protective Groups in Organic Synthesis, Wiley 1979], (C₁-C₆)-alkyl, (C₁-C₆)-alkoxy, CN, OH, CHO, CH-[(C₁-C₆)-alkoxyl]₂, COOH, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl,
or wherein the carbon nucleophiles are organometallic compounds selected from the group consisting of R²₂Cu(CN)Li₂, R²Li, R²MgX, R²ZnX, R²₂Zn and R²₄₋ₙTiR²²ₙ (n<4), where R² and R²² have the abovementioned meanings and X is a leaving group.

5. A compound of the formula VI 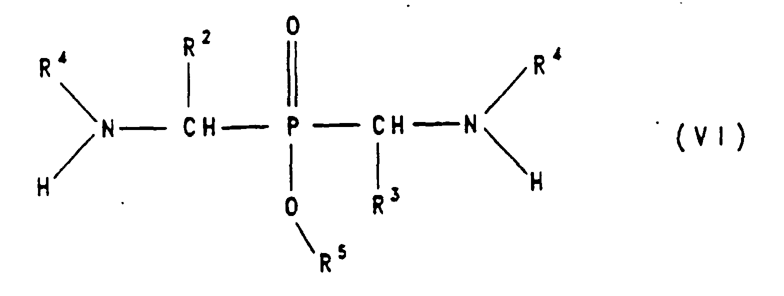
in which R² and R³, independently of one another, are P(O)[OH]₂, P(O)(OR²³)₂, where R²³ independently of one another is (C₁-C₆)-alkyl, (C₆-C₁₂)-aryl or (C₇-C₁₃)-arylalkyl, where aryl can be substituted one or more times by fluorine, chlorine, bromine, NO₂, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl or O-C(O)-(C₆-C₁₂)-aryl,
R⁴ is a protective group for the amino function and
R⁵ is (C₁-C₁₈)-alkyl, (C₂-C₁₈)-alkenyl, (C₂-C₁₈)-alkynyl, (C₆-C₁₂)-aryl, (C₇-C₂₀)-arylalkyl, where alkyl, alkenyl, alkynyl and aryl can be substituted one or more times by fluorine, chlorine, bromine, oxo, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl or O-C(O)-(C₆-C₁₂)-aryl.

6. A compound of the formula VI as claimed in claim 5, wherein R² and R³ independently of one another are P(O)[OH] ₂, P(O)[O-(C₁-C₄)-alkyl]₂, P(O)[O-(C₆-C₁₂)-aryl]₂ or P(O)[O-(C₇-C₁₃)-arylalkyl]₂ and
R⁵ is (C₁-C₆)-alkyl, (C₆-C₁₂)-aryl or (C₇-C₁₃)-arylalkyl, where aryl can be substituted by Cl, Br or (C₁-C₃)-alkyl.

7. A compound of the formula I 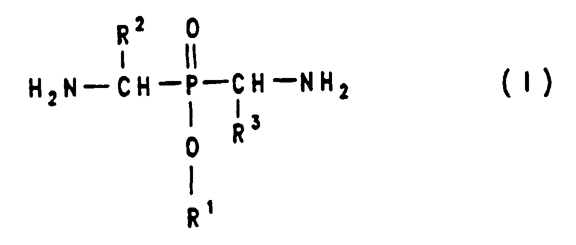 wherein
R¹ is H, (C₁-C₁₈)-alkyl, (C₂-C₁₈)-alkenyl, (C₂-C₁₈)-alkynyl, (C₆-C₁₂)-aryl, (C₇-C₂₀)-arylalkyl, where alkyl, alkenyl, alkynyl and aryl can be substituted one or more times by fluorine, chlorine, bromine, oxo, NO₂, NH₂ or protected form, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl, O-C(O)-(C₆-C₁₂)-aryl, and
R² and R³ independently of one another are P(O)[OH]₂, P(O)(OR²³)₂, where R²³ independently of one another is (C₁-C₆)-alkyl, (C₆-C₁₂)-aryl or (C₇-C₁₃)-arylalkyl, where aryl can be substituted one or more times by fluorine, chlorine, bromine, NO₂, CN, OH, COOH, (C₁-C₆)-alkyl, (C₁-C₆)-alkoxy, C(O)-O-(C₁-C₆)-alkyl, C(O)-O-(C₆-C₁₂)-aryl, C(O)-(C₁-C₆)-alkyl, C(O)-(C₆-C₁₂)-aryl, O-C(O)-(C₁-C₆)-alkyl or O-C(O)-(C₆-C₁₂)-aryl.

8. A compound of the formula I as claimed in claim 7, wherein
R¹ is H, (C₁-C₆)-alkyl, (C₆-C₁₂)-aryl, (C₇-C₁₃)-arylalkyl, where aryl can be substituted by Cl, Br or (C₁-C₃)-alkyl, and
R² and R³ independently of one another are P(O)[OH]₂, P(O)[O-(C₁-C₄)-alkyl]₂, P(O)[O-(C₆-C₁₂)-aryl]₂ or P(O)[O-(C₇-C₁₃)-arylalkyl]₂.

## Revendications

1. Procédé pour la préparation des composés de formule VI 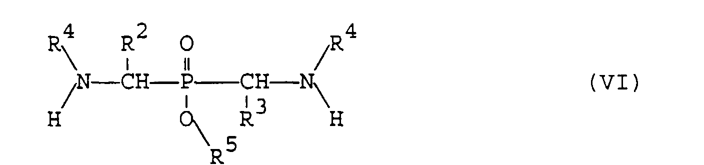
dans laquelle R² et R³, indépendamment l'un de l'autre, représentent un atome d'hydrogène ou un radical alkyle en C₁-C₁₈, alcényle en C₂-C₁₈, alcynyle en C₂-C₁₈, les radicaux alkyle, alcényle et alcynyle pouvant être substitués chacun une ou plusieurs fois par un ou des atomes de fluor, chlore, brome ou groupes COOH, oxo, NO₂, NH₂, NHC(O)-alkyle(C₁-C₆), NHC(O)-aryle(C₆-C₁₂), CN, OH, CHO, CH-[alcoxy(C₁-C₆)]₂, COOH, SO₃H, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle(C₆-C₁₂), alcoxy en C₁-C₆, ou représentent un radical aryle en C₆-C₁₂, arylalkyle en C₇-C₂₂, le fragment aryle pouvant être une ou plusieurs fois substitué par un ou des atomes de fluor, chlore, brome ou groupes, NO₂, NH₂, NHCO(O)-alkyle(C₁-C₆), NHC(O)-aryle(C₆-C₁₂), CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle-(C₆-C₁₂), O-C(O)-alkyle(C₁-C₆), O-C(O)-aryle(C₆-C₁₂) ou représentent un radical P(O)(OH)₂, P(O)(OR²³)₂, les restes R²³ représentant, indépendamment l'un de l'autre, un groupe alkyle en C₁-C₆, aryle en C₆-C₁₂ ou arylalkyle en C₇-C₁₃, et le fragment aryle pouvant être une ou plusieurs fois substitué par un ou des atomes de fluor, chlore, brome ou groupes NO₂, CN, OH, COOH, alkyle en C₁-C₆, alcoxy en C₁-C₆, C(O)-O-alkyle (C₁-C₆), C(O)-O-aryle(C₆-C₁₂), C(O)-alkyle(C₁-C₆), C(O)-aryle(C₆-C₁₂), O-C(O)-alkyle(C₁-C₆) ou O-C(O)-aryle-(C₆-C₁₂)
R² et R³ ne représentant pas simultanément un atome d'hydrogène,
R⁴ représente un groupe protecteur de la fonction amino et R⁵ représente un groupe alkyle en C₁-C₁₈, alcényle en C₂-C₁₈, alcynyle en C₂-C₁₈, aryle en C₆-C₁₂, arylalkyle en C₇-C₂₀, les groupes alkyle, alcényle, alcynyle et aryle pouvant être une ou plusieurs fois substitués par un ou des atomes de fluor, de chlore, de brome ou groupes oxo, NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₁-C₁₂), C(O)-alkyle(C₁-C₆), C(O)-aryle(C₆-C₁₂), O-C(O)-alkyle(C₁-C₆), O-C(O)aryle(C₆-C₁₂),
caractérisé en ce que l'on convertit un composé de formule IV 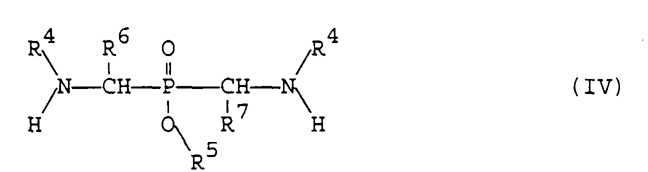 dans laquelle R⁴ et R⁵ ont les significations données ci-dessus, et
R⁶ et R⁷ représentent, indépendamment l'un de l'autre, H, Cl ou Br, les deux radicaux ne représentant pas simultanément un atome d'hydrogène,
a) par une réaction avec une base, en un composé de formule Va ou Vb, 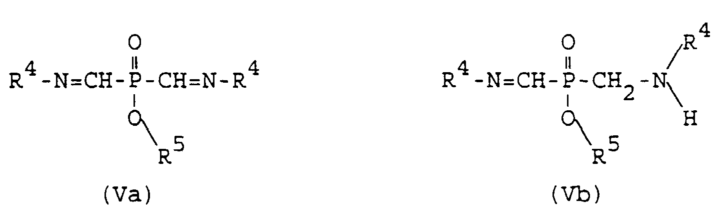 R⁴ et R⁵ ayant les significations données ci-dessus et, pour l'obtention du composé VI, on fait réagir un composé de formule Va ou Vb avec des agents C-nucléophiles, ou
b) on prépare le composé de formule VI en faisant réagir directement un composé de formule VI avec R²₂Cu(CN)Li₂, R²Li, R²MgX*,* R²ZnX, R²₂Zn, R²₄₋ₙTiR²²ₙ (n < 4), P(O-R²³)₃, R² ayant la signification donnée plus haut, R²² représentant un groupe N-[alkyl(C₁-C₆)]₂, O-alkyle(C₁-C₆), O-aryle-(C₆-C₁₂), le fragment aryle pouvant être substitué par un atome de fluor, chlore ou brome ou par un groupe NO₂, NH₂ ou NH₂ sous forme protégée, CN, OH, COOH, C(O)-O-alkyle(C₁-C₆), alkyle en C₁-C₆, alcoxy en C₁-C₆, ou représentant un dérivé d'acide d-tartrique et R²³ représentant un groupe alkyle en C₁-C₆, aryle en C₆-C₁₂, arylalkyle en C₇-C₁₃, le reste aryle pouvant être une ou plusieurs fois substitué par un ou des atomes de fluor, chlore, brome ou groupes NO₂, CN, OH, COOH, alkyle en C₁-C₆, alcoxy en C₁-C₆, C(O)-O-alkyle(C₁-C₆), C(O)-alkyle(C₁-C₆), O-C(O)-alkyle(C₁-C₆), et X représentant un groupe partant.

2. Procédé selon la revendication 1, caractérisé en ce que R² et R³, indépendamment l'un de l'autre, représentent un groupe alkyle en C₁-C₆, alcényle en C₂-C₆, alcynyle en C₂-C₆, le groupe alkyle pouvant être une ou plusieurs fois substitué par un ou des atomes de fluor, chlore, brome, ou groupes oxo, COOH, C(O)-alkyle(C₁-C₆), C(O)-O-alkyle(C₁-C₆), ou représentent un groupe aryle en C₆-C₁₂, arylalkyle en C₇-C₁₃, le reste aryle pouvant être une ou plusieurs fois substitué par un ou des atomes de chlore, brome ou groupes CN, alcoxy en C₁-C₃; ou représentent un groupe P(O)(OH)₂, P(O)(OR²³)₂, les groupes R²³ représentant, indépendamment l'un de l'autre, un groupe alkyle en C₁-C₆, aryle en C₆-C₁₂ ou arylalkyle en C₇-C₁₃, en particulier R¹ et R² représentent un groupe alkyle en C₁-C₆, alcényle en C₂-C₆, alcynyle en C₂-C₆, benzyle, P(O) (OH)₂ ou P(O) [O-alkyl(C₁-C₆)]₂, et R⁵ représente un groupe alkyle en C₁-C₄, alcényle en C₂-C₄, phényle, benzyle, en particulier R⁵ représente un groupe alkyle en C₁-C₄ ou benzyle.

3. Procédé selon la revendication 1 ou 2, caractérisé en ce que, dans la conversion d'un composé de formule IV, la base est une trialkyl(C₁-C₆)amine, la pyridine, le butyllithium, la lithium-diisopropylamine (LDA), l'hydrure de sodium, l'amidure de sodium, le tert-butylate de potassium, l'amidure de sodium-R²¹ONa, R²¹ représentant un groupe alkyle en C₂-C₆ ou CH₃CH₂-O-CH₂CH₂, ou des bases de type polyamino-phosphazène peralkylées non chargées, en particulier une trialkyl(C₁-C₃)amine ou la pyridine.

4. Procédé selon une ou plusieurs des revendications 1 à 3, caractérisé en ce que les agents C-nucléophiles sont choisis parmi des composés CH-acides de formules VIIa, VIIb, VIII et IX 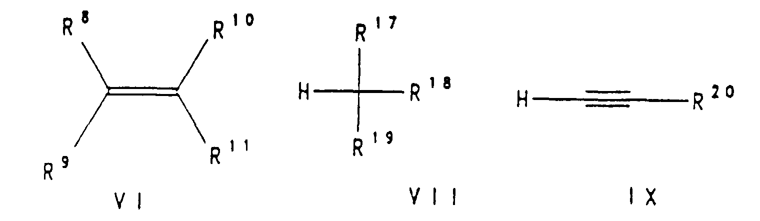 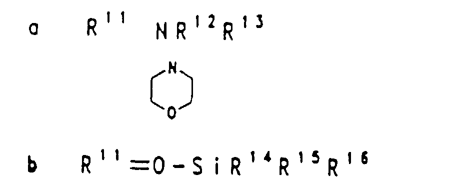
R⁸, R⁹, R¹⁰, identiques ou indépendant les uns des autres, représentent un atome d'hydrogène ou un groupe alkyle en C₁-C₁₈, alcényle en C₂-C₁₈, alcynyle en C₂-C₁₈, aryle en C₆-C₁₂, arylalkyle en C₇-C₂₀; en ce cas, les groupes alkyle, alcényle, alcynyle et aryle peuvent être une ou plusieurs fois substitués par un ou des atomes de fluor, chlore, brome ou groupes NO₂, NH₂ ou NH₂ sous forme protégée (Greene, *Protective Groups in Organic Synthesis,* Wiley 1979), alkyle en C₁-C₆, alcoxy en C₁-C₆, CN, OH, CHO, CH-[alcoxy(C₁-C₆)]₂, COOH, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle(C₆-C₁₂);
R¹², R¹³, R¹⁴, R¹⁵ et R¹⁶ sont identiques ou indépendants les uns des autres et représentent un groupe alkyle en C₁-C₆, aryle en C₆-C₁₂, les groupes alkyle et aryle pouvant être une ou plusieurs fois substitués par un ou des atomes de fluor, chlore, brome ou groupes NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle(C₆-C₁₂);
R¹⁷ représente un atome d'hydrogène ou un groupe alkyle en C₁-C₆, le groupe alkyle pouvant être une ou plusieurs fois substitué par un ou des atomes de fluor, chlore, brome ou groupes NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle-(C₆-C₁₂), OC(O)-alkyle(C₁-C₆), O-C(O)-aryle(C₆-C₁₂); R¹⁸
et R¹⁹, identiques ou indépendants l'un de l'autre, représentent un atome d'hydrogène ou un groupe CN, C(O)-O-alkyle(C₁-C₆), C(O)-O-aryle(C₆-C₁₂), C(O)-alkyle(C₁-C₆) C(O)-aryle(C₆-C₁₂), les groupes alkyle et aryle pouvant être une ou plusieurs fois substitués par un ou des atomes de fluor, chlore, brome ou goupes NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle-(C₆-C₁₂), étant entendu que lorsque R¹⁸ représente un atome d'hydrogène, R¹⁹ ne représente pas lui aussi un atome d'hydrogène, et inversement;
R²⁰ représente un atome d'hydrogène ou un groupe alkyle en C₁-C₁₈, alcényle en C₂-C₁₈, alcynyle en C₂-C₁₈, aryle en C₆-C₁₂, arylalkyle en C₇-C₂₀; en outre, les groupes alkyle, alcényle, alcynyle et aryle peuvent être une ou plusieurs fois substitués par un ou des atomes de fluor, chlore, brome ou groupes NO₂, NH₂ ou NH₂ sous forme protégée (Greene, *Protective Groups in Organic* Synthesis, Wiley, 1979), alkyle en C₁-C₆, alcoxy en C₁-C₆, CN, OH, CHO, CH-[alcoxy(C₁-C₆)]₂, COOH, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle(C6-C12), ou en ce que les agents C-nucléophiles sont des composés organométalliques choisis parmi R²₂Cu(CN)Li₂, R²Li, R²MgX; R²ZnX, R²₂Zn et R²₄₋ₙTiR²²ₙ (n < 4), R² et R²² ayant les significations données plus haut et X représentant un groupe partant.

5. Composés de formule VI 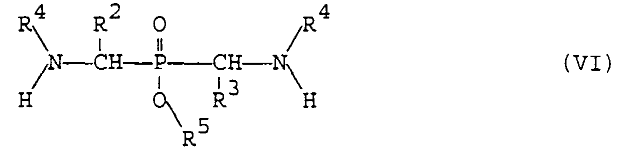 dans laquelle R² et R³, indépendamment l'un de l'autre, représentent un groupe P(O)(OH)₂, P(O)(OR²³)₂, les radicaux R²³ représentant, indépendamment l'un de l'autre, un groupe alkyle en C₁-C₆, aryle en C₆-C₁₂ ou arylalkyle en C₇-C₁₃, le reste aryle pouvant être une ou plusieurs fois substitué par un ou des atomes de fluor, chlore, brome ou groupes NO₂, CN, OH, COOH, alkyle en C₁-C₆, alcoxy en C₁-C₆, C(O)-O-alkyle-(C₁-C₈), C(O)-O-aryle(C₆-C₁₂), C(O)-alkyle(C₁-C₆), C(O)-aryle(C₆-C₁₂), O-C(O)-alkyle(C₁-C₆) ou O-C(O)-aryle(C₆-C₁₂), R⁴ représente un groupe protecteur de la fonction amino et R⁵ représente un groupe alkyle en C₁-C₁₈, alcényle en C₂-C₁₈, alcynyle en C₂-C₁₈, aryle en C₆-C₁₂, arylalkyle en C₇-C₂₀, les groupes alkyle, alcényle, alcynyle et aryle pouvant être une ou plusieurs fois substitués par un ou des atomes de fluor, chlore, brome ou groupes oxo, NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆) ou O-C(O)-aryle(C₆-C₁₂).

6. Composés de formule VI selon la revendication 5, caractérisés en ce que R² et R³ représentent, indépendamment l'un de l'autre, un groupe P(O) (OH)₂, P(O) [O-alkyle-(C₁-C₄)]₂, P(O)[O-aryle(C₆-C₁₂)]₂ ou P(O)[O-arylalkyle-(C₇-C₁₃)]₂ et R⁵ représente un groupe alkyle en C₁-C₆, aryle en C₆-C₁₂ ou arylalkyle en C₇-C₁₃, le radical aryle pouvant être substitué par Cl, Br ou par un groupe alkyle en C₁-C₃.

7. Composés de formule I 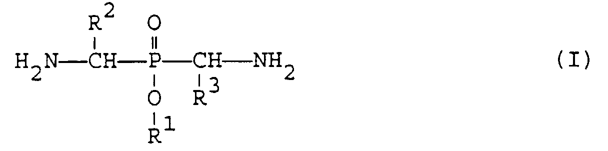 caractérisés en ce que
R¹ représente H ou un groupe alkyle en C₁-C₁₈, alcényle en C₂-C₁₈, alcynyle en C₂-C₁₈, aryle en C₆-C₁₂, arylalkyle en C₇-C₂₀, les radicaux alkyle, alcényle, alcynyle et aryle pouvant être une ou plusieurs fois substitués par un ou des atomes de fluor, chlore, brome, ou groupes oxo, NO₂, NH₂ ou NH₂ sous forme protégée, CN, OH, COOH, alkyle en C₁-C₆, alcoxy en C₁-C₆, C(O)-O-alkyle(C₁-C₆), C(O)-O-aryle(C₆-C₁₂), C(O)-alkyle(C₁-C₆), C(O)-aryle(C₆-C₁₂), O-C(O)-alkyle(C₁-C₆), O-C(O)-aryle(C₆-C₁₂), et
R² et R³ représentent, indépendamment l'un de l'autre, un groupe P(O)(OH)₂, P(O)(OR²³)₂, les radicaux R²³ représentant, indépendamment l'un de l'autre, un groupe alkyle en C₁-C₆, aryle en C₆-C₁₂ ou arylalkyle en C₇-C₁₃, le reste aryle pouvant être une ou plusieurs fois substitué par un ou des atomes de fluor, chlore, brome ou groupes NO₂, CN, OH, COOH, alkyle en C₁-C₆, alcoxy en C₁-C₆, C(O)-O-alkyle-(C₁-C₆), C(O)-O-aryle(C₆-C₁₂), C(O)-alkyle(C₁-C₆), C(O)-aryle(C₆-C₁₂) , O-C(O)-alkyle(C₁-C₆) ou O-C(O)-aryle(C₆-C₁₂).

8. Composés de formule I selon la revendication 7, caractérisés en ce que R¹ représente H ou un groupe alkyle en C₁-C₆, aryle en C₆-C₁₂, arylalkyle en C₇-C₁₃, le reste aryle pouvant être substitué par Cl, Br ou par un groupe alkyle en C₁-C₃, et
R² et R³ représentent, indépendamment l'un de l'autre, un groupe P(O)(OH)₂, P(O) [O-alkyle(C₁-C₄)]₂, P(O) [O-aryle-(C₆-C₁₂)]₂ ou P(O) [O-arylalkyle(C₇-C₁₃)]₂.
